# EUROPEAN PATENT APPLICATION

(11) **EP 4 309 994 A1**
(43) Date of publication of application: **24.01.2024**
(21) Application number: 22771557.0
(22) Date of filing: 18.03.2022
(51) Int. Cl.: B63C 11/00, B63C 11/48, G05D 1/00, G01S 15/88

(54) **SYSTEM FOR COUPLING AQUATIC RELAY MACHINE AND UNDERWATER CRUISING BODY, AND OPERATION METHOD THEREFOR**

(30) Priority: 19.03.2021 JP 2021045636
(71) Applicant: National Institute of Maritime, Port and Aviation Technology, Mitaka-shi, Tokyo 181-0004 (JP)
(72) Inventor: SASANO Masahiko, Mitaka-shi, Tokyo 181-0004 (JP)
(74) Representative: Balder IP Law, S.L.
(86) International application number: PCT/JP2022/012797
(87) International publication number: WO 2022/196812

(57) **Abstract**

The present invention comprises: a surface repeater vehicle 200 having a repeater vehicle propulsion means 38 and a repeater vehicle position measurement means 40; an underwater vehicle 100 having a vehicle position estimation means 20; an information transmission line 24 for connecting between the surface repeater vehicle 200 and the underwater vehicle 100, and transmitting acquired information including image information obtained by the underwater vehicle 100; a position setting means 54 for setting a target latitude and target longitude for the surface repeater vehicle 200 and the underwater vehicle 100; and a control means 12, 32 for controlling the surface repeater vehicle 200 and the underwater vehicle 100, and is configured such that, on the basis of the target latitude and target longitude that have been set and an on-water position measured by the repeater vehicle position measurement means 40, the repeater vehicle propulsion means 38 is driven, the position of the surface repeater vehicle 200 is controlled by the control means 12, 32, and on the basis of the target latitude and target longitude that have been set and an underwater position estimated by the vehicle position estimation means 20, the position of the underwater vehicle 100 is controlled by the control means 12, 32, thereby causing the underwater vehicle 100 and the surface repeater vehicle 200 to travel side-by-side while maintaining a vertical positional relationship on the water surface and under water until reaching the target latitude and target longitude.

## Description

### TECHNICAL FIELD

The present disclosure relates to a linked system of a surface repeater vehicle and an underwater vehicle, and a method of operating the linked system.

### BACKGROUND

In recent years, water bottoms such as sea bottoms have attracted much attention as sources of supply of various resources such as mineral resources. With such a trend, the necessity for water bottom investigations has also increased. Thus, a technique is required for highly precisely controlling a position of an underwater vehicle which travels under water.

A technique is disclosed (Patent Document 1) having an unmanned vehicle guided and controlled by radio waves from a mothership, and an underwater vehicle linked to the unmanned vehicle via a cable, and in which a position of the underwater vehicle is controlled by transmitting a control signal from the mothership to the underwater vehicle via the unmanned vehicle.

A system is disclosed (Patent Document 2) having an underwater vehicle which travels under water, and a surface vehicle which travels on a water surface following the underwater vehicle, and in which the surface vehicle acquires its own position by a GPS processor, and transmits the own position to the underwater vehicle through underwater acoustic communication. The underwater vehicle can autonomously travel under the water based on the position of the surface vehicle.

Similarly, a system is disclosed (Patent Document 3) having an underwater vehicle which travels under water, and a surface vehicle which travels on the water surface following the underwater vehicle, and in which the surface vehicle acquires a position of the underwater vehicle through underwater acoustic communication, and the surface vehicle is controlled to follow the underwater vehicle based on the position of the underwater vehicle.

A system is disclosed (Patent Document 4) which conducts an investigation under the sea using a remotely operated vehicle (ROV) and an autonomous surface vehicle (ASV) configured to function as a communication relay station. The autonomous surface vehicle (ASV) is used as a relay station for transmitting data from a control station to the remotely operated vehicle (ROV).

### CITATION LIST

### PATENT LITERATURE

Patent Document 1: JP S57-196309 A
Patent Document 2: JP H8-249060 A
Patent Document 3: JP 2017-165333 A
Patent Document 4: WO 2018/112045

### SUMMARY

### TECHNICAL PROBLEM

An autonomous underwater vehicle of the related art is an independent underwater vehicle without a wire, and underwater acoustic communication is primarily employed as a means to communicate with the mothership. However, because a communication speed is limited, it has not been possible to check information such as a video image captured by an underwater camera, on the mothership in real time and with sufficient speed.

### SOLUTION TO PROBLEM

A linked system of a surface repeater vehicle and an underwater vehicle according to Claim 1 comprises: a surface repeater vehicle having a repeater vehicle propulsion means and a repeater vehicle position measurement means; an underwater vehicle having a vehicle position estimation means; an information transmission line that connects the surface repeater vehicle and the underwater vehicle, and that transmits acquired information including image information acquired by the underwater vehicle; a position setting means that sets a target latitude and a target longitude for the surface repeater vehicle and the underwater vehicle; and a control means that controls the surface repeater vehicle and the underwater vehicle, wherein a position of the surface repeater vehicle is controlled with the control means by driving the repeater vehicle propulsion means based on the target latitude and the target longitude which are set, and a surface position measured by the repeater vehicle position measurement means, and a position of the underwater vehicle is controlled with the control means based on the target latitude and the target longitude which are set, and an underwater position estimated by the vehicle position estimation means, so that the underwater vehicle and the surface repeater vehicle travel in parallel with each other to the target latitude and the target longitude while maintaining a vertical position relationship between a water surface and underwater.

Desirably, the linked system comprises a mothership having the position setting means, wherein the target latitude, the target longitude, and the acquired information are transmitted between the mothership and the surface repeater vehicle using wireless communication.

Desirably, at least one of the surface repeater vehicle or the underwater vehicle can be remotely manipulated from the mothership.

Desirably, the repeater vehicle position measurement means has a satellite positioning system receiver and an attitude and heading reference system (AHRS). In addition, desirably, the vehicle position estimation means has an inertial navigation system (INS) and a Doppler velocity log (DVL), or has an attitude and heading reference system (AHRS) and the Doppler velocity log (DVL).

Desirably, the vehicle position estimation means has a depth indicator, and the underwater vehicle is controlled with the control means such that the underwater vehicle is positioned at a depth which is set by the position setting means.

Desirably, the surface repeater vehicle has repeater vehicle imaging means which can image the underwater vehicle.

Desirably, the underwater vehicle has a neutral buoyancy with respect to water.

Desirably, the linked system comprises a plurality of groups of the surface repeater vehicles, the underwater vehicles, the information transmission lines, and the control means, and the position setting means sets the target latitude and the target longitude for each of the plurality of groups.

Desirably, the linked system comprises another underwater vehicle at an intermediate point on the information transmission line.

Desirably, a plurality of vibration receiving means are provided at a plurality of locations on the information transmission line, acoustic oscillation means which transmits acoustic waves into water is provided on the mothership, a reflected acoustic vibration from a bed layer due to transmission of the acoustic waves by the acoustic oscillation means is acquired by the plurality of vibration receiving means, and the reflected acoustic vibration which is acquired is transmitted as acoustic information using the information transmission line.

A method of operating the linked system of the surface repeater vehicle and the underwater vehicle according to Claim 11 comprises: a vehicle introduction step in which the underwater vehicle is introduced into water; a vehicle lowering step in which the underwater vehicle is caused to approach a water bottom and is maintained at a predetermined position; a repeater vehicle introduction step in which the surface repeater vehicle is introduced on a water surface; a vertical position securing step in which the surface repeater vehicle and the underwater vehicle are set in the vertical position relationship; and an initial position inputting step in which, after the surface repeater vehicle and the underwater vehicle are set in the vertical position relationship, the surface position measured by the repeater vehicle position measurement means is transmitted to the underwater vehicle via the information transmission line, and is input as an initial position of an underwater position for the underwater vehicle.

Desirably, the vehicle introduction step, the vehicle lowering step, the repeater vehicle introduction step, the vertical position securing step, and the initial position inputting step are repeated for each of the plurality of groups.

Desirably, the method further comprises, between the vehicle introduction step and the vehicle lowering step, an intermediate underwater vehicle introduction step in which the other underwater vehicle is introduced into water, and an intermediate underwater vehicle lowering step in which the other underwater vehicle is maintained at an intermediate position between the water surface and the water bottom, wherein the other underwater vehicle is set in the vertical position relationship in the vertical position securing step, and the surface position is transmitted to the other underwater vehicle via the information transmission line in the initial position inputting step.

Desirably, the method further comprises, prior to the vehicle introduction step, a status checking step in which it is checked whether or not operations of the underwater vehicle and the surface repeater vehicle are normal.

Desirably, the method further comprises, between the vehicle introduction step and the vehicle lowering step, an estimated value judgment step in which it is judged whether or not the estimated value of the underwater position of the underwater vehicle by the vehicle position estimation means is a reasonable value.

Desirably, in the vertical position securing step, when the surface repeater vehicle and the underwater vehicle are not set in the vertical position relationship, an operator manipulates the surface repeater vehicle to correct the position such that the underwater vehicle is set in the vertical position relationship, to thereby secure the vertical position relationship.

Desirably, the method further comprises: a target position setting step in which, after the initial position inputting step, the position setting means sets the target latitude and the target longitude for the surface repeater vehicle; a target position inputting step in which the target latitude and the target longitude which are set are transmitted and input to the underwater vehicle via the information transmission line; a travel control step in which the surface repeater vehicle and the underwater vehicle are controlled to travel in parallel with each other and with an equal speed toward the target latitude and the target longitude while maintaining the vertical position relationship; and a position maintaining step in which, after the target latitude and the target longitude are reached, positions of the surface repeater vehicle and the underwater vehicle are maintained.

Desirably, in the travel control step, the position of the surface repeater vehicle is controlled based on the surface position measured by the repeater vehicle position measurement means, and the position of the underwater vehicle is controlled based on the underwater position estimated by the vehicle position estimation means.

Desirably, the travel control step includes: a repeater vehicle reaching judgment step in which it is judged whether or not the surface position of the surface repeater vehicle is within a reaching range of the target latitude and the target longitude; and a vehicle reaching judgment step in which it is judged whether or not the underwater position of the underwater vehicle is within the reaching range of the target latitude and the target longitude, and the method proceeds to the position maintaining step when the surface repeater vehicle and the underwater vehicle have reached the reaching range.

Desirably, when the surface repeater vehicle and the underwater vehicle have not reached the reaching range, the control to cause the surface repeater vehicle and the underwater vehicle to travel toward the target latitude and the target longitude is continued.

Desirably, the method further comprises: a vehicle position checking step in which the operator checks a position of the underwater vehicle using imaging means; a position judgment step in which it is judged whether or not the underwater vehicle is positioned immediately below the surface repeater vehicle; and an underwater position correction step in which, when the underwater vehicle is positioned immediately below the surface repeater vehicle, the surface position acquired by the repeater vehicle position measurement means is transmitted to the underwater vehicle via the information transmission line, and the underwater position of the underwater vehicle is controlled to correct the vertical position relationship of the surface repeater vehicle and the underwater vehicle.

Desirably, the method further comprises a vehicle raising step in which, when the operator cannot recognize the position of the underwater vehicle in the vehicle position checking step, the position of the underwater vehicle is controlled to raise the underwater vehicle to a position at which the underwater vehicle can be recognized with the imaging means.

Desirably, the method further comprises a position deviation correction step in which, when it is judged in the position judgment step that the underwater vehicle is not positioned immediately below the surface repeater vehicle, the position of the surface repeater vehicle is controlled by a manipulation of the operator, to move the surface repeater vehicle to a position immediately above the underwater vehicle.

Desirably, the method further comprises a survey step in which, after the target latitude and the target longitude are reached, the positions of the surface repeater vehicle and the underwater vehicle are controlled, to survey underwater with vehicle imaging means of the underwater vehicle, and an information transmission step in which acquired information including image information acquired through the survey is transmitted to the mothership via the information transmission line and the wireless communication.

Desirably, the method further comprises: an acoustic oscillation step in which, after the target latitude and the target longitude are reached, an acoustic wave is transmitted from the acoustic oscillation means provided on the mothership; a reflected acoustic vibration acquisition step in which the reflected acoustic vibration from the bed layer is acquired by a plurality of the vibration receiving means; and an information transmission step in which the reflected acoustic vibration which is acquired is transmitted as acoustic information to the mothership via the information transmission line and the wireless communication.

### ADVANTAGEOUS EFFECTS OF INVENTION

According to the linked system of the surface repeater vehicle and the underwater vehicle of Claim 1, with a structure including: a surface repeater vehicle having a repeater vehicle propulsion means and a repeater vehicle position measurement means; an underwater vehicle having a vehicle position estimation means; an information transmission line that connects the surface repeater vehicle and the underwater vehicle, and that transmits acquired information including image information acquired by the underwater vehicle; a position setting means that sets a target latitude and a target longitude for the surface repeater vehicle and the underwater vehicle; and a control means that controls the surface repeater vehicle and the underwater vehicle, and in which a position of the surface repeater vehicle is controlled with the control means by driving the repeater vehicle propulsion means based on the target latitude and the target longitude which are set and a surface position measured by the repeater vehicle position measurement means, and a position of the underwater vehicle is controlled with the control means based on the target latitude and the target longitude which are set and an underwater position estimated by the vehicle position estimation means, so that the underwater vehicle and the surface repeater vehicle travel in parallel with each other to the target latitude and the target longitude while maintaining a vertical position relationship between a water surface and underwater, it is possible to transmit, with a high speed and stably, image information of a large volume such as a captured image acquired by the underwater vehicle to the mothership or the like via the surface repeater vehicle.

Here, with the structure having a mothership having the position setting means and in which the target latitude, the target longitude, and the acquired information are transmitted between the mothership and the surface repeater vehicle using wireless communication, it is possible to perform the communication between the mothership and the surface repeater vehicle without connecting the mothership and the surface repeater vehicle with a wire such as a cable.

With the structure in which at least one of the surface repeater vehicle or the underwater vehicle can be remotely manipulated from the mothership, it is possible to move the surface repeater vehicle and the underwater vehicle to respective target positions, and to achieve an appropriate relative position relationship between the surface repeater vehicle and the underwater vehicle.

With the structure in which the repeater vehicle position measurement means has a satellite positioning system receiver and an attitude and heading reference system (AHRS), it is possible to measure the position of the surface repeater vehicle using the satellite positioning system receiver and the attitude and heading reference system (AHRS). Further, with the structure in which the vehicle position estimation means has an inertial navigation system (INS) and a Doppler velocity log (DVL), or has an attitude and heading reference system (AHRS) and the Doppler velocity log (DVL), it is possible to measure the position of the underwater vehicle using the inertial navigation system (INS) and the Doppler velocity log (DVL), or using the attitude and heading reference system (AHRS) and the Doppler velocity log (DVL).

With the structure in which the vehicle position estimation means has a depth indicator, and the underwater vehicle is controlled with the control means such that the underwater vehicle is positioned at a depth which is set by the position setting means, it is possible to cause the underwater vehicle to travel toward the target depth.

With the structure in which the surface repeater vehicle has repeater vehicle imaging means which can image the underwater vehicle, it is possible to recognize the underwater vehicle in the image captured by the repeater vehicle imaging means, and to move the underwater vehicle and the surface repeater vehicle according to the situation which has been recognized.

With the structure in which the underwater vehicle has a neutral buoyancy with respect to water, it is possible to easily secure buoyancy of the underwater vehicle.

With the structure in which the linked system comprises a plurality of groups of the surface repeater vehicles, the underwater vehicles, the information transmission lines, and the control means, and the position setting means sets the target latitude and the target longitude for each of the plurality of groups, it is possible to investigate an inspection target such as resources and a subaqueous cable simultaneously over a wide range, and to thereby shorten the investigation time.

With the structure in which the linked system comprises another underwater vehicle at an intermediate point on the information transmission line, it is possible to realize position control of a higher precision for the surface repeater vehicle, by controlling a horizontal position (latitude and longitude) and a depth (altitude) of the other underwater vehicle at the intermediate point.

With the structure in which a plurality of vibration receiving means are provided at a plurality of locations on the information transmission line, acoustic oscillation means which transmits acoustic waves into water is provided on the mothership, a reflected acoustic vibration from a bed layer due to transmission of the acoustic waves by the acoustic oscillation means is acquired by the plurality of vibration receiving means, and the reflected acoustic vibration which is acquired is transmitted as acoustic information using the information transmission line, it is possible to apply analysis such as VCS (Vertical Cable Seismic) analysis for understanding the structure of the water bottom or the reflection surface with high precision.

According to a method of operating the linked system of the surface repeater vehicle and the underwater vehicle according to Claim 11, with a method having a vehicle introduction step in which the underwater vehicle is introduced into water, a vehicle lowering step in which the underwater vehicle is caused to approach a water bottom and is maintained at a predetermined position, a repeater vehicle introduction step in which the surface repeater vehicle is introduced on a water surface, a vertical position securing step in which the surface repeater vehicle and the underwater vehicle are set in the vertical position relationship, and an initial position inputting step in which, after the surface repeater vehicle and the underwater vehicle are set in the vertical position relationship, the surface position measured by the repeater vehicle position measurement means is transmitted to the underwater vehicle via the information transmission line, and is input as an initial position of an underwater position of the underwater vehicle, it is possible to communicate, with a high speed and stably, information such as the captured image acquired by the underwater vehicle to the mothership or the like via the surface repeater vehicle.

Here, with the structure in which the vehicle introduction step, the vehicle lowering step, the repeater vehicle introduction step, the vertical position securing step, and the initial position inputting step are repeated for each of the plurality of groups, it is possible to investigate an inspection target such as resources and a subaqueous cable simultaneously over a wide range, and to thereby shorten the investigation time.

With the structure in which the method further includes, between the vehicle introduction step and the vehicle lowering step, an intermediate underwater vehicle introduction step in which the other underwater vehicle is introduced into water, and an intermediate underwater vehicle lowering step in which the other underwater vehicle is maintained at an intermediate position between the water surface and the water bottom, and in which the other underwater vehicle is set in the vertical position relationship in the vertical position securing step, and the surface position is transmitted to the other underwater vehicle via the information transmission line in the initial position inputting step, it is possible to investigate an inspection target such as resources and a subaqueous cable simultaneously over a wide range, and to thereby shorten the investigation time.

With the structure in which the method further includes, prior to the vehicle introduction step, a status checking step in which it is checked whether or not operations of the underwater vehicle and the surface repeater vehicle are normal, it is possible to introduce the underwater vehicle and the surface repeater vehicle after checking that the underwater vehicle and the surface repeater vehicle are normal.

With the structure in which the method further includes, between the vehicle introduction step and the vehicle lowering step, an estimated value judgment step in which it is judged whether or not the estimated value of the underwater position of the underwater vehicle by the vehicle position estimation means is a proper value, it is possible to lower the underwater vehicle into the water after checking the operation of the vehicle position estimation means of the underwater vehicle.

With the structure in which, in the vertical position securing step, when the surface repeater vehicle and the underwater vehicle are not set in the vertical position relationship, an operator manipulates the surface repeater vehicle to correct the position such that the underwater vehicle is set in the vertical position relationship, to thereby secure the vertical position relationship, it is possible to set the surface repeater vehicle and the underwater vehicle to an appropriate vertical position relationship.

With the structure in which the method further includes: a target position setting step in which, after the initial position inputting step, the position setting means sets the target latitude and the target longitude for the surface repeater vehicle; a target position inputting step in which the target latitude and the target longitude which are set are transmitted and input to the underwater vehicle via the information transmission line; a travel control step in which the surface repeater vehicle and the underwater vehicle are controlled to travel in parallel with each other and with an equal speed toward the target latitude and the target longitude while maintaining the vertical position relationship; and a position maintaining step in which, after the target latitude and the target longitude are reached, positions of the surface repeater vehicle and the underwater vehicle are maintained, it is possible to move the surface repeater vehicle and the underwater vehicle to the target positions, and to maintain the position relationship of the surface repeater vehicle and the underwater vehicle.

With the structure in which, in the travel control step, the position of the surface repeater vehicle is controlled based on the surface position measured by the repeater vehicle position measurement means, and the position of the underwater vehicle is controlled based on the underwater position estimated by the vehicle position estimation means, it is possible to move the surface repeater vehicle to the target position based on the surface position, to move the underwater vehicle to the target position based on the underwater position, and to maintain the position relationship of the surface repeater vehicle and the underwater vehicle.

With the structure in which the travel control step includes: a repeater vehicle reaching judgment step in which it is judged whether or not the surface position of the surface repeater vehicle is within a reaching range of the target latitude and the target longitude; and a vehicle reaching judgment step in which it is judged whether or not the underwater position of the underwater vehicle is within the reaching range of the target latitude and the target longitude, and the method proceeds to the position maintaining step when the surface repeater vehicle and the underwater vehicle have reached the reaching range, it is possible to move the surface repeater vehicle and the underwater vehicle respectively to the reaching ranges of the target positions, and to maintain the position relationship of the surface repeater vehicle and the underwater vehicle.

With the structure in which, when the surface repeater vehicle and the underwater vehicle have not reached the reaching range, the control to cause the surface repeater vehicle and the underwater vehicle to travel toward the target latitude and the target longitude is continued, it is possible to move the surface repeater vehicle and the underwater vehicle respectively to the reaching ranges of the target positions, and to maintain the position relationship of the surface repeater vehicle and the underwater vehicle.

With the structure in which the method further includes: a vehicle position checking step in which a position of the underwater vehicle is checked using imaging means; a position judgment step in which it is judged whether or not the underwater vehicle is positioned immediately below the surface repeater vehicle; and an underwater position correction step in which, when the underwater vehicle is positioned immediately below the surface repeater vehicle, the surface position acquired by the repeater vehicle position measurement means is transmitted to the underwater vehicle via the information transmission line, and the underwater position of the underwater vehicle is controlled to correct the vertical position relationship of the surface repeater vehicle and the underwater vehicle, it is possible to check the underwater vehicle in the captured image, and to correct the position relationship in the vertical position of the surface repeater vehicle and the underwater vehicle so that the underwater vehicle is positioned immediately below the surface repeater vehicle.

With the structure in which the method further includes a vehicle raising step in which, when an operator cannot recognize the position of the underwater vehicle in the vehicle position checking step, the position of the underwater vehicle is controlled to raise the underwater vehicle to a position at which the underwater vehicle can be recognized with the imaging means, it is possible to raise the underwater vehicle to achieve a situation in which the underwater vehicle can be recognized in the captured image.

With the structure in which the method further includes a position deviation correction step in which, when it is judged in the position judgment step that the underwater vehicle is not positioned immediately below the surface repeater vehicle, the position of the surface repeater vehicle is controlled by a manipulation of an operator to move the surface repeater vehicle to a position immediately above the underwater vehicle, it is possible to correct the position relationship in the vertical direction of the surface repeater vehicle and the underwater vehicle so that the surface repeater vehicle is positioned immediately below the underwater vehicle.

With the structure in which the method further comprises a survey step in which, after the target latitude and the target longitude are reached, the positions of the surface repeater vehicle and the underwater vehicle are controlled, to survey underwater with vehicle imaging means of the underwater vehicle, and an information transmission step in which acquired information including image information acquired through the survey is transmitted to the mothership via the information transmission line and the wireless communication, it is possible to display or analyze the image information acquired by the underwater vehicle.

With the structure in which the method further comprises: an acoustic oscillation step in which, after the target latitude and the target longitude are reached, an acoustic wave is transmitted from the acoustic oscillation means provided on the mothership; a reflected acoustic vibration acquisition step in which the reflected acoustic vibration from the bed layer is acquired by a plurality of the vibration receiving means; and an information transmission step in which the reflected acoustic vibration which is acquired is transmitted as acoustic information to the mothership via the information transmission line and the wireless communication, it is possible to apply analysis such as VCS (Vertical Cable Seismic) analysis, to thereby understand the structure of the water bottom and the reflection surface with high precision.

### BRIEF DESCRIPTION OF DRAWINGS

FIG. 1 is a conceptual structural diagram of a linked system of a surface repeater vehicle and an underwater vehicle according to an embodiment of the present disclosure.
FIG. 2 is a diagram showing the structure of the underwater vehicle according to the embodiment.
FIG. 3 is a diagram showing the structure of a surface repeater vehicle according to the embodiment.
FIG. 4 is a diagram showing the structure of a mothership according to the embodiment.
FIG. 5 is a flowchart showing a process of introduction of the underwater vehicle and the surface repeater vehicle according to the embodiment.
FIG. 6 is a flowchart showing a process of travel of the underwater vehicle and the surface repeater vehicle according to the embodiment.
FIG. 7 is a flowchart showing a correction process of vertical positions of the underwater vehicle and the surface repeater vehicle according to the embodiment.
FIG. 8 is a conceptual structural diagram of a linked system of a surface repeater vehicle and an underwater vehicle according to a first alternative configuration.
FIG. 9 is a conceptual structural diagram of a linked system of a surface repeater vehicle and an underwater vehicle according to a second alternative configuration.
FIG. 10 is a flowchart showing a process of introduction of an underwater vehicle and a surface repeater vehicle according to the second alternative configuration.
FIG. 11 is a conceptual structural diagram of a linked system of a surface repeater vehicle and an underwater vehicle according to a third alternative configuration.
FIG. 12 is a flowchart showing a process using an acoustic oscillator and a geophone in the third alternative configuration.
FIG. 13 is a flowchart showing a measurement process using a linked system of a surface repeater vehicle and an underwater vehicle according to the embodiment.

### DESCRIPTION OF EMBODIMENTS

### <Linked System of Surface Repeater vehicle and Underwater Vehicle>

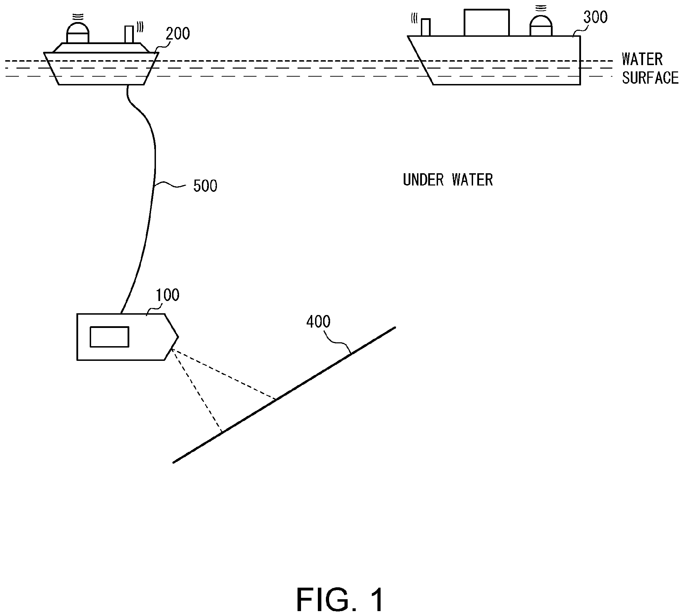

As shown in FIG. 1, a linked system of a surface repeater vehicle and an underwater vehicle according an embodiment of the present disclosure comprises an underwater vehicle 100, a surface repeater vehicle 200, and a mothership 300. The underwater vehicle 100 is used in water between a water surface and a water bottom 400. The surface repeater vehicle 200 is used on the water surface.

The underwater vehicle 100 and the surface repeater vehicle 200 are linked to each other by a cable 500. The "link" of the linked system includes not only linking the underwater vehicle 100 and the surface repeater vehicle 200 with the cable 500 or the like, but also cooperative traveling and cooperative operations of the underwater vehicle 100 and the surface repeater vehicle 200. In addition, functions such as transmission of electric power and towing may be performed by the cable 500, in addition to the function to transmit information.

The underwater vehicle 100 autonomously travels in water, and is used for an investigation an inspection target such as resources or a subaqueous cable, which is a target object. The range of usage of the underwater vehicle 100 is not limited to the under-sea use, and the underwater vehicle 100 may alternatively be used in rivers, lakes, ponds, swamps, or the like, or in human-made pools or the like. The surface repeater vehicle 200 travels on the water surface following the underwater vehicle 100, and is used for relaying communication between the underwater vehicle 100 and the mothership 300. The mothership 300 receives information related to the investigation from the underwater vehicle 100, and also provides information for travel to the underwater vehicle 100 and the surface repeater vehicle 200.

In the present embodiment, the mothership 300 is described, but the mothership 300 is not limited to a ship, and may alternatively be a base station placed on land, an underwater depot ship placed underwater, or a flying object which flies in the air. In particular, in the case of the underwater depot ship placed under water, for example, a configuration may be employed in which the underwater depot ship is placed near the water surface and communicates with the surface repeater vehicle 200 through radio waves using an antenna provided to extend into the air, or a configuration may be employed in which the underwater depot ship is placed completely in the water and directly communicates with the surface repeater vehicle 200 through optical communication.

### <Structure of Underwater Vehicle>

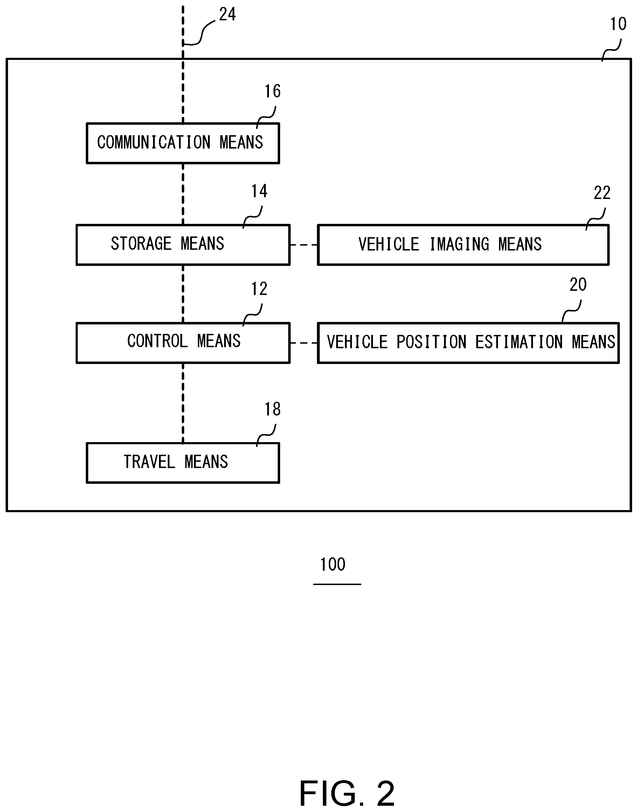

As shown in a conceptual structural diagram of FIG. 2, the underwater vehicle 100 according to the embodiment of the present disclosure comprises a hull 10, control means 12, storage means 14, communication means 16, travel means 18, vehicle position estimation means 20, and vehicle imaging means 22. The underwater vehicle 100 is, for example, an autonomous unmanned vehicle (AUV), but is not limited thereto.

The hull 10 is a structure which forms a space such as a ship chamber and which can be airtightly closed. The hull 10 is formed from metal, reinforced plastic, or the like, and also has a role to mechanically support constituent elements of the underwater vehicle 100. The hull 10 is desirably formed in such a manner that the underwater vehicle 100 has neutral buoyancy.

The control means 12 is means which controls various functions in the underwater vehicle 100. The control means 12 may be a CPU in a computer or the like. The control means 12 executes a control program which is defined in advance, to comprehensively control various means provided on the underwater vehicle 100.

The storage means 14 is means which stores information used in the underwater vehicle 100, and the control program of the underwater vehicle 100. The storage means 14 may be, for example, a semiconductor memory, a hard disk drive, or the like.

The storage means 14 stores information indicating a target position of the underwater vehicle 100 in the control of the position of the underwater vehicle 100. The target position is stored, for example, as an initial position or a way point (underwater cruise point) including a target latitude and a target longitude. That is, the initial position and the way point (underwater cruise point) indicating a path of travel when the hull 10 of the underwater vehicle 100 travels in the water are set and stored. The initial position and the way point are information representing a path in the water which is a target path for travel of the hull 10, with discrete coordinate points and in sequence. Alternatively, the initial position and the way point may be represented as a combination of a depth from the water surface in addition to the target latitude and the target longitude.

The storage means 14 also stores an estimated value of an own position of the underwater vehicle 100 estimated by the vehicle position estimation means 20 which is to be described later. Further, the storage means 14 stores image information acquired by the vehicle imaging means 22 which is to be described later.

The communication means 16 is means which communicates information between the underwater vehicle 100 and the surface repeater vehicle 200. The communication means 16 receives information from the surface repeater vehicle 200 via an information transmission line 24, and transmits information acquired by the underwater vehicle 100 to the surface repeater vehicle 200 via the information transmission line 24. The information transmission line 24 may be a part of the cable 500. The communication means 16 may employ, for example, Ethernet as a communication protocol. In this case, the information transmission line 24 is an Ethernet cable.

Here, by employing wired communication between the underwater vehicle 100 and the surface repeater vehicle 200, communication can be performed with a higher speed and a larger volume in comparison to the transmission method through acoustic signals in the water. With this configuration, the underwater vehicle 100 can communicate with the surface repeater vehicle 200 and the mothership 300 with a high speed, and can transmit image information or the like of a large volume. In particular, with regard to the image information or the like of the large volume, although there have appeared techniques that enable transmission of the image information from the underwater vehicle 100 to the surface repeater vehicle 200 via the underwater acoustic communication while taking some time, in the case in which the underwater vehicle 100 transmits the image information which is captured while the underwater vehicle 100 travels underwater, the transmission cannot be performed in real time, and these techniques are not suited for underwater investigation.

A length of the information transmission line 24 desirably includes a margin with respect to a maximum depth of a water area in which the underwater vehicle 100 and the surface repeater vehicle 200 are to travel. For example, when the maximum depth planned to be traveled by the underwater vehicle 100 is 15 m, the cable length of the information transmission line 24 may be set to 20 m. With such a configuration, it becomes possible for the underwater vehicle 100 and the surface repeater vehicle 200 to travel in parallel with each other while maintaining an appropriate position relationship therebetween. Alternatively, a configuration may be employed in which a feeding/winding device of the information transmission line 24 is provided on the surface repeater vehicle 200, and the information transmission line 24 is fed or wound depending on a distance between the underwater vehicle 100 and the surface repeater vehicle 200.

The travel means 18 is means which generates a driving force to propel the hull 10, and to turn (change a course of) the hull 10 in the up-and-down and left-and-right directions. The travel means 18 is formed, for example, including a primary propeller driving motor, a propeller, a rotational shaft, or the like, as a mechanism for generating the driving force. The primary propeller driving motor is a motor for supplying the driving force to the hull 10. The primary propeller driving motor rotationally drives the rotational shaft of the travel means 18 with a rotation rate and a torque corresponding to a drive control signal from the control means 12, with an electric power from a battery. With this process, the propeller connected to a drive shaft is rotated, and propulsion force is applied to the hull 10. The travel means 18 also includes a rudder for turning (changing a course of) the hull 10 in the up-and-down and left-and-down directions. By tilting a vertical rudder to right or to left with respect to the hull 10, the hull 10 can be turned to the left or to the right. The vertical rudder may be rotated by a vertical rudder driving motor. The vertical rudder driving motor rotationally drives the vertical rudder so that an angle corresponding to a vertical rudder control signal from the control means 12 is realized. By tilting a horizontal rudder upward or downward with respect to the hull 10, the hull 10 can be headed down (pitched down) or headed up (pitched up). The horizontal rudder can be driven by a horizontal rudder driving motor. The horizontal rudder driving motor rotationally drives the horizontal rudder so that an angle corresponding to a horizontal rudder control signal from the control means 12 is realized. Alternatively, a configuration may be employed in which individual travel means 18 is provided at each of the left and right sides, and the hull 10 is turned (changed in the course) in the left-and-right direction by adjusting the balance of thrusts between the left and right travel means 18, without providing the vertical rudder.

The vehicle position estimation means 20 is formed including constituting elements for estimating a current position (underwater position) of the hull 10 under the water as an own position. The travel position estimation means 20 can be realized, for example, by a programmable microcomputer. The own position of the underwater vehicle 100 estimated by the vehicle position estimation means 20 is input to the control means 12. The control means 12 stores the input own position of the underwater vehicle 100 in the storage means 14, and also uses the input own position for control of the position of the underwater vehicle 100.

The vehicle position estimation means 20 may have a structure including an inertial navigation system (INS). The inertial navigation system is formed including a speedometer for measuring a speed of the underwater vehicle 100. The speedometer may be formed by, for example, a Doppler velocity log (DVL). In the inertial navigation, a moved distance of the underwater vehicle 100 from a starting point is determined by integrating the speed of the underwater vehicle 100 detected by the speedometer, to thereby estimate the own position of the underwater vehicle 100.

Alternatively, the vehicle position estimation means 20 may have a structure including an attitude and heading reference system (AHRS). The attitude and heading reference system is one type of the inertial navigation system using a gyroscope or the like, and is used in combination with the speedometer such as the Doppler velocity log (DVL), to calculate and output rotational and linear motions of the underwater vehicle 100 in the water. The vehicle position estimation means 20 determines a moved distance of the underwater vehicle 100 from a starting point by integrating the rotational and linear motions of the underwater vehicle 100 calculated by the attitude and heading reference system, to thereby estimate the own position of the underwater vehicle 100.

Further, the vehicle position estimation means 20 may include a depth indicator for measuring the depth of the underwater vehicle 100 in the water. The depth of the underwater vehicle 100 measured by the depth indicator is input to the control means 12. The control means 12 stores the input depth of the underwater vehicle 100 in the storage means 14, and also uses the input depth for control of the depth of the underwater vehicle 100.

Travel of the hull 10 is controlled based on the own position estimated by the vehicle position estimation means 20. The control means 12 reads the way points, which are set in the storage means 14 in advance, in order, and controls the travel means 18 such that a difference between the way point and the own position of the hull 10 estimated by the vehicle position estimation means 20 becomes smaller.

The control of the travel means 18 may be performed based on a hull motion model. The hull motion model is also called AUV dynamics, and is formed from equations of motion indicating a motion performance of the hull 10 under the water. More specifically, the primary propeller driving motor, the vertical rudder, the horizontal rudder, and the like may be controlled based on responsive characteristics of the primary propeller driving motor, the vertical rudder, the horizontal rudder, and the like in the travel means 18, and the movement characteristic or the like of the hull 10

In addition, the travel means 18 is controlled according to underwater vehicle correction information for correcting the own position of the hull 10 estimated by the vehicle position estimation means 20. The control means 12 corrects the target position of travel according to the underwater vehicle correction information which is transmitted from the mothership 300, to thereby control the travel means 18 so as to move the hull 10 toward the target position. That is, the travel means 18 is controlled according to the underwater travel correction information, to enable compensation for a position error based on the setting of the initial position and the way point of the hull 10, and a position error in the estimation of the own position in the vehicle position estimation means 20.

The vehicle imaging means 22 is formed including constituting elements for imaging an outside of the hull 10. The vehicle imaging means 22 may be, for example, a camera for imaging a still image, or a video camera for imaging a video image. Image information (captured image data) related to an image or a video image acquired by the vehicle imaging means 22 is stored in the storage means 14. The image information (captured image data) related to the image or the video image acquired by the vehicle imaging means 22 is also transmitted to the surface repeater vehicle 200 using the communication means 16 and via the information transmission line 24.

Alternatively, a plurality of the vehicle imaging means 22 may be provided, so as to enable acquisition of a relative position between the hull 10 and a target object, based on a stereo vision. The relative position information may be used for correction of an error in the estimation of the own position of the underwater vehicle 100 by the vehicle position estimation means 20, to be described later.

In the present embodiment, a configuration is described in which the vehicle imaging means 22 is provided on the underwater vehicle 100, but alternatively, any means may be provided which can acquire a situation under the water by the underwater vehicle 100. For example, a shape or the like of the water bottom may be acquired through sonar using sound waves or ultrasound waves. In this case, the acquired information is stored in the storage means 14, and is also transmitted to the surface repeater vehicle 200 using the communication means 16 and via the information transmission line 24.

### <Structure of Surface Repeater vehicle>

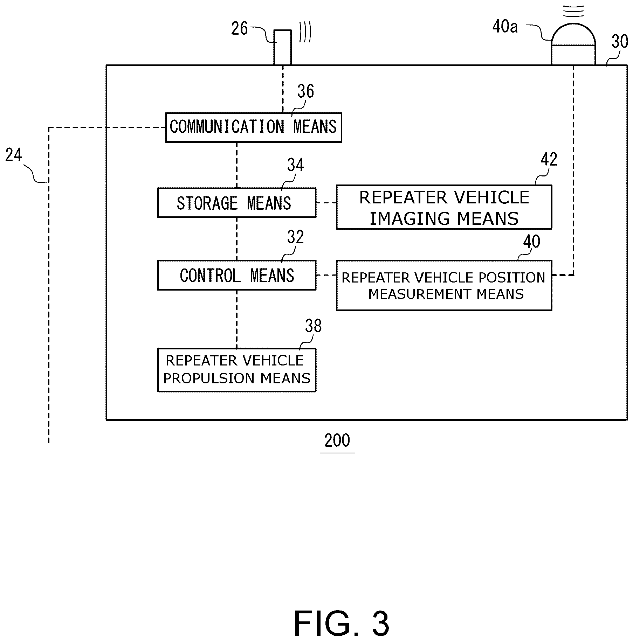

As shown in a conceptual structural diagram of FIG. 3, the surface repeater vehicle 200 according to the embodiment comprises a frame 30, control means 32, storage means 34, communication means 36, repeater vehicle propulsion means 38, repeater vehicle position measurement means 40, and repeater vehicle imaging means 42. The surface repeater vehicle 200 is, for example, an autonomous unmanned surface vehicle (ASV), but is not limited thereto.

The frame 30 is a structure which forms a space such as a ship chamber and which can be airtightly closed. The frame 30 is formed from metal, reinforced plastic, or the like, and also has a role to mechanically support constituent elements of the surface repeater vehicle 200.

The control means 32 is means which controls various functions of the surface repeater vehicle 200. The control means 32 may be a CPU or the like in a computer. The control means 32 executes a control program which is defined in advance, to comprehensively control various means equipped on the surface repeater vehicle 200. Alternatively, a configuration may be employed in which the control means 32 of the surface repeater vehicle 200 and the control means 12 of the underwater vehicle 100 are integrated, and the system has one of these control means.

The storage means 34 is means which stores information used in the surface repeater vehicle 200 and the control program of the surface repeater vehicle 200. The storage means 34 may be, for example, a semiconductor memory, a hard disk drive, or the like.

The storage means 34 stores information indicating a target position of the surface repeater vehicle 200 in the control of the position of the surface repeater vehicle 200. The target position is stored, for example, as an initial position and a way point (travel point) including a target latitude and a target longitude. That is, the initial position and a way point showing a path of travel when the frame 30 of the surface repeater vehicle 200 travels on the water surface are set and stored. The initial position and the way point are information showing the path on the water surface which is a target of travel of the frame 30, with discrete coordinate points, and in sequence.

The storage means 34 also stores information of an own position of the surface repeater vehicle 200 measured by the repeater vehicle position measurement means 40 to be described later. The storage means 34 further stores image information acquired by the repeater vehicle imaging means 42, to be described later.

The communication means 36 is means which communicates information between the surface repeater vehicle 200 and the underwater vehicle 100, and which communicates information between the surface repeater vehicle 200 and the mothership 300. The communication means 36 receives information from the underwater vehicle 100 via the information transmission line 24, and transmits information to the underwater vehicle 100 via the information transmission line 24. In addition, the communication means 36 receives information from the mothership 300 via a wireless communication device 26, and transmits information to the mothership 300 via the wireless communication device 26. The communication using the wireless communication device 26 may be, for example, the Wi-Fi system using a frequency band of 2.4 GHz. However, the wireless communication is not limited to this communication, and may alternatively be, for example, UHF communication, VHF communication, optical communication, satellite communication, or the like.

By employing the wireless communication between the mothership 300 and the surface repeater vehicle 200, movable ranges of the underwater vehicle 100 and the surface repeater vehicle 200 can be enlarged in comparison to a case where wired communication is employed.

The repeater vehicle propulsion means 38 is means which generates a driving force for propelling the frame 30, and for turning (changing a course of) the frame 30 in the left-and-right direction. The repeater vehicle propulsion means 38 is formed, for example, including a primary propeller driving motor, a propeller, a rotational shaft, or the like, as a mechanism for generating the driving force. The primary propeller driving motor is a motor for supplying the driving force to the frame 30. The primary propeller driving motor rotationally drives the rotational shaft of the repeater vehicle propulsion means 38 with a rotation rate and a torque corresponding to a drive control signal from the control means 32, with an electric power from a battery. With this process, the propeller connected to a drive shaft is rotated, and a propulsion force is supplied to the frame 30. In addition, the repeater vehicle propulsion means 38 includes a rudder for turning (changing a course of) the frame 30 in the left-and-right direction. By tilting a vertical rudder to right or to left with respect to the frame 30, the frame 30 may be turned to the left or to the right. The vertical rudder can be rotated by a vertical rudder driving motor. The vertical rudder driving motor rotationally drives the vertical rudder so that an angle corresponding to a vertical rudder control signal from the control means 32 is realized. Alternatively, a configuration may be employed in which individual repeater vehicle propulsion means 38 is provided at the left and right sides, and the frame 30 is turned (changed in the course) in the left-and-right direction by adjusting a balance of thrusts between the left and right repeater vehicle propulsion means 38, without providing the vertical rudder.

The repeater vehicle position measurement means 40 is formed including constituent elements for measuring a current position of the frame 30 on the water surface as an own position. The repeater vehicle position measurement means 40 may be realized, for example, by a programmable microcomputer. The own position of the surface repeater vehicle 200 measured by the repeater vehicle position measurement means 40 is input to the control means 32. The control means 32 stores the input own position of the surface repeater vehicle 200 in the storage means 14, and also uses the input own position for control of the position of the surface repeater vehicle 200.

The repeater vehicle position measurement means 40 may have a structure including a receiver 40a of a satellite positioning system (GPS; Global Positioning System). The repeater vehicle position measurement means 40 measures the current own position (water surface position) of the surface repeater vehicle 200 based on a GPS signal received by the receiver 40a. The measured own position of the surface repeater vehicle 200 is input to the control means 32, and is used for the control of the position of the surface repeater vehicle 200. Alternatively, the repeater vehicle position measurement means 40 may have a structure including an attitude and heading reference system (AHRS). Using the attitude and heading reference system, the own position of the surface repeater vehicle 200 measured by the repeater vehicle position measurement means 40 can be corrected.

The repeater vehicle imaging means 42 is formed including constituent elements for imaging an outside of the frame 30. The repeater vehicle imaging means 42 may be, for example, a camera for imaging a still image, a video camera for imaging a video image, or the like. Image information (captured image data) related to an image or a video image acquired by the repeater vehicle imaging means 42 is stored in the storage means 34. In addition, the image information (captured image data) related to the image or the video image acquired by the repeater vehicle imaging means 42 is also transmitted to the mothership 300 using the communication means 36 and via the wireless communication device 26.

Travel of the frame 30 is controlled based on the own position measured by the repeater vehicle position measurement means 40. The control means 32 reads, in order, way points which are set in the storage means 34 in advance, and controls the repeater vehicle propulsion means 38 such that a difference between the way point and the own position of the frame 30 measured by the repeater vehicle position measurement means 40 becomes smaller.

The control of the repeater vehicle propulsion means 38 may be performed based on a hull motion model. The hull motion model is also called ASV dynamics, and is formed from equations of motions representing a motion performance of the frame 30 on the water surface. More specifically, the primary propeller driving motor, the propeller, the vertical rudder, and the like may be controlled based on responsive characteristics of the primary propeller driving motor, the vertical rudder, the horizontal rudder, and the like of the repeater vehicle propulsion means 38, or a movement characteristic or the like of the frame 30.

In addition, the repeater vehicle propulsion means 38 is controlled based on surface repeater vehicle correction information for correcting the own position of the frame 30 estimated by the repeater vehicle position measurement means 40. The control means 32 controls the repeater vehicle propulsion means 38 so that the frame 30 reaches the target position, by correcting a target position of travel according to the surface repeater vehicle correction information transmitted from the mothership 300. That is, the repeater vehicle propulsion means 38 is controlled according to the surface repeater vehicle correction information, and can compensate for a position error due to setting of the initial position and the way point of the frame 30 and a position error in the measurement of the own position by the repeater vehicle position measurement means 40.

Alternatively, a configuration may be employed in which the surface repeater vehicle 200 travels in parallel with and corresponding to the movement of the underwater vehicle 100. In the configuration in which the surface repeater vehicle 200 and the underwater vehicle 100 are wire-connected by the information transmission line 24, the surface repeater vehicle 200 may be moved together with the underwater vehicle 100 by the surface repeater vehicle 200 being pulled by the information transmission line 24 when the underwater vehicle 100 moves.

### <Structure of Mothership>

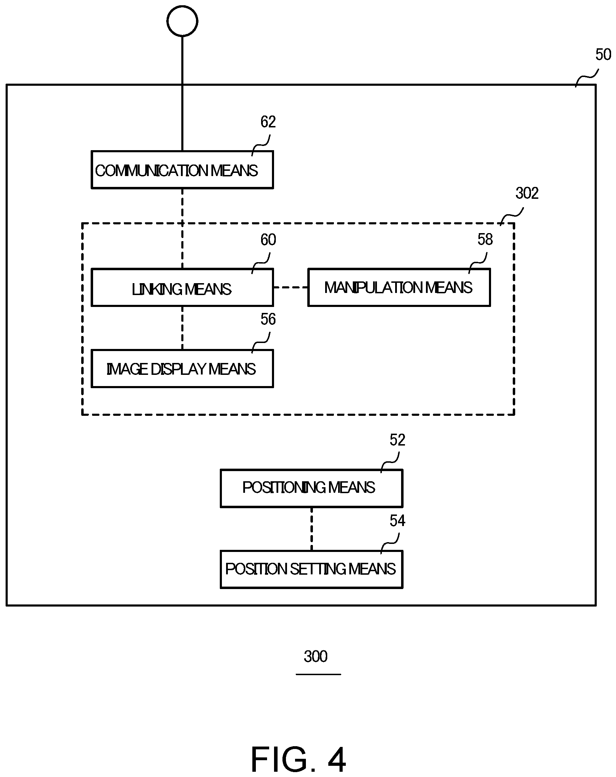

The mothership 300 according to an embodiment of the present disclosure is a ship serving as a base for the underwater vehicle 100 and the surface repeater vehicle 200. As shown in a conceptual structural diagram of FIG. 4, the mothership 300 comprises a hull 50, positioning means 52, position setting means 54, image display means 56, manipulation means 58, linking means 60, and communication means 62.

The hull 50 is a structure which forms a space of the mothership 300. The hull 50 is formed from metal, reinforced plastic, or the like, and also has a role to mechanically support constituent elements of the mothership 300. In addition, travel means for moving the mothership 300 may be provided on the hull 50. When a base station which is placed on the land is to be employed in place of the mothership 300, the hull 50 does not need to be provided. In addition, when a flying object which flies in the air is to be employed in place of the mothership 300, an airframe of the flying object may be employed in place of the hull 50.

The positioning means 52 is formed including a device for acquiring a current position of the mothership 300. The positioning means 52 may be, for example, a positioning means such as a satellite positioning system (GPS: Global Positioning System). However, the positioning means 52 is not limited to such a configuration, and may alternatively have a structure which can measure the position of the mothership 300 according to a distance and a direction from a reference point placed on the land.

The position setting means 54 is means which sets the positioning information by the positioning means 52 for the underwater vehicle 100 and the surface repeater vehicle 200. The position setting means 54 sets the positioning information of the mothership 300 acquired by the positioning means 52 as information of the initial positions in the vehicle position estimation means 20 of the underwater vehicle 100. That is, in a state in which the underwater vehicle 100 is mounted on the mothership 300, the information of the measured position by the positioning means 52 is set as the initial position of the underwater vehicle 100 in the vehicle position estimation means 20. In addition, the position setting means 54 is used also for setting a way point in the vehicle position estimation means 20 of the underwater vehicle 100. Further, the position setting means 54 is used also for setting a way point in the repeater vehicle position measurement means 40 of the surface repeater vehicle 200.

The image display means 56, the manipulation means 58, and the linking means 60 form monitoring means 302 in the mothership 300. The monitoring means 302 is used for monitoring a position of the underwater vehicle 100, a position of the surface repeater vehicle 200, and a relative position of the underwater vehicle 100 and the surface repeater vehicle 200, and also for correcting these positions.

The image display means 56 includes a device which displays an image captured by the vehicle imaging means 22 of the underwater vehicle 100. That is, the image display means 56 displays an image under the water captured by the vehicle imaging means 22 of the underwater vehicle 100, based on image information acquired from the underwater vehicle 100 via the communication means 62, which is to be described later. An occupant of the mothership 300 can check the image captured by the underwater vehicle 100 by viewing the image displayed on the image display means 56.

The image display means 56 also includes a device which displays an image captured by the repeater vehicle imaging means 42 of the surface repeater vehicle 200. The image display means 56 may include, for example, a display. That is, the image display means 56 displays an image under the water captured by the repeater vehicle imaging means 42 of the surface repeater vehicle 200, based on image information acquired from the surface repeater vehicle 200 via the communication means 62. The occupant of the mothership 400 can check the image captured by the surface repeater vehicle 200 by viewing the image displayed on the image display means 56.

The image display means 56 may be provided separately for the underwater vehicle 100 and the surface repeater vehicle 200, or a structure may be employed in which the underwater vehicle 100 and the surface repeater vehicle 200 can be switched by a switch or the like.

The manipulation means 58 includes means for performing a manipulation to correct the position of the underwater vehicle 100. The manipulation means 58 may be formed, for example, including a pointing device such as a joystick and a mouse for correcting the position of the underwater vehicle 100. By an administrator on board the mothership 300 manipulating the manipulation means 58, underwater vehicle correction information for moving the underwater vehicle 100 is generated at the linking means 60.

The manipulation means 58 also includes means for performing a manipulation to correct the position of the surface repeater vehicle 200. The manipulation means 58 may be formed, for example, including a pointing device such as a joystick and a mouse for correcting the position of the surface repeater vehicle 200. By the administrator on board the mothership 300 manipulating the manipulation means 58, surface repeater vehicle correction information for moving the surface repeater vehicle 200 is generated at the linking means 60.

The manipulation means 58 may be provided separately for the underwater vehicle 100 and the surface repeater vehicle 200, or a structure may be employed in which the underwater vehicle 100 and the surface repeater vehicle 200 can be switched by a switch or the like.

The linking means 60 is means which links the image displayed on the image display means 56, and the underwater vehicle correction information for the underwater vehicle 100 manipulated by the manipulation means 58 and the surface repeater vehicle correction information for the surface repeater vehicle 200. The linking means 60 may be realized, for example, by a programmable microcomputer. The microcomputer may be common with the control device for controlling the image display means 56 and the manipulation means 58. The linking means 60 generates the underwater vehicle correction information for correcting the own position information estimated by the vehicle position estimation means 20 of the underwater vehicle 100 according to an amount of manipulation of the manipulation means 58. The linking means 60 generates the underwater vehicle correction information in such a manner that an amount of correction of the own position information of the underwater vehicle 100 is increased as the amount of manipulation of the manipulation means 58 is increased. In addition, the linking means 60 generates the surface repeater vehicle correction information for correcting the own position information measured by the repeater vehicle position measurement means 40 of the surface repeater vehicle 200 according to an amount of manipulation of the manipulation means 58. The linking means 60 generates the surface repeater vehicle correction information in such a manner that an amount of correction of the own position information of the surface repeater vehicle 200 is increased as the amount of manipulation of the manipulation means 58 is increased.

For example, when the manipulation means 58 is the pointing device such as the joystick or the mouse, the underwater vehicle correction information is generated based on the amount of manipulation and the direction of manipulation, in such a manner that the underwater vehicle 100 is to be moved by a distance corresponding to the amount of manipulation toward the direction of manipulation. In addition, for example, when the manipulation means 58 is the pointing device such as the joystick or the mouse, the surface repeater vehicle correction information is generated based on the amount of manipulation and the direction of manipulation, in such a manner that the surface repeater vehicle 200 is to be moved by a distance corresponding to the amount of manipulation toward the direction of manipulation. Further, for example, when the manipulation means 58 is a touch panel integrated with the image display means 56, the underwater vehicle correction information is generated based on an amount of manipulation for moving (swiping) a target position displayed on the image display means 56 within a screen and a direction of manipulation, in such a manner that the underwater vehicle 100 is to be moved by a distance corresponding to the amount of manipulation toward a direction opposite the direction of manipulation (direction toward which the underwater vehicle 100 moves in a direction of movement of the target position in the captured image). A relationship of the amount of correction of the movement distance of the underwater vehicle 100 with respect to the amount of manipulation may be set in advance. For example, when the manipulation means 58 is a touch panel integrated with the image display means 56, the surface repeater vehicle correction information is generated based on an amount of manipulation for moving (swiping) a target position displayed on the image display means 56 within a screen and a direction of manipulation, in such a manner that the surface repeater vehicle 200 is to be moved by a distance corresponding to the amount of manipulation toward a direction opposite from the direction of manipulation (direction to which the surface repeater vehicle 200 moves in a direction of movement of the target position in the captured image). A relationship of the amount of correction of the movement distance of the surface repeater vehicle 200 with respect to the amount of manipulation may be set in advance.

With this process, the underwater vehicle 100 and the surface repeater vehicle 200 can be moved with respect to the target position displayed on the screen, so that the underwater vehicle 100 and the surface repeater vehicle 200 can be set at correct positions. In addition, the underwater vehicle 100 and the surface repeater vehicle 200 can be moved in real time with respect to the target position displayed on the screen.

The communication means 62 is formed including a device for receiving information transmitted from the surface repeater vehicle 200 to the mothership 300 and for transmitting information from the mothership 300 to the surface repeater vehicle 200. In the present embodiment, because the communication is performed between the underwater vehicle 100 and the mothership 300 via the surface repeater vehicle 200, the mothership 300 is used as wireless communication means for communication of the surface repeater vehicle 200. When the communication of the surface repeater vehicle 200 is wireless, the communication means 62 includes a device for the wireless communication using a communication method such as radio waves. More specifically, the communication means 62 may include a wireless communication device such as WiFi communication, UHF communication, satellite communication, and the like.

In the present embodiment, a configuration is employed in which the underwater vehicle correction information and the surface repeater vehicle correction information are generated at the linking means 60 based on the manipulation of the manipulation means 58 by the administrator, but alternatively, the underwater vehicle correction information and the surface repeater vehicle correction information may be automatically generated at the linking means 60 (or the manipulation means 58) without the manipulation of the administrator.

For example, the captured image transmitted from the underwater vehicle 100 may be image-processed, to identify a target position at which the target object is displayed in the image based on a feature of the target object (such as a shape and a color), and the underwater vehicle correction information for moving the underwater vehicle 100 may be generated such that the target position is positioned at the center of the captured image. That is, the underwater vehicle correction information may be generated based on a direction and a magnitude of a deviation of a current target position from the center position of the image within the image, and to move the underwater vehicle 100 by a distance corresponding to the amount of deviation in the direction of deviation. Similarly, for example, the captured image transmitted from the surface repeater vehicle 200 may be image-processed, to identify a target position at which the target object is displayed in the image based on a feature (such as a shape or a color) of the target object (for example, the underwater vehicle 100 to follow), and the surface repeater vehicle correction information for moving the surface repeater vehicle 200 may be generated such that the target position is positioned at the center of the captured image. That is, the surface repeater vehicle correction information may be generated based on a direction and a magnitude of a deviation of a current target position from the center position of the image within the image, to move the surface repeater vehicle 200 by a distance corresponding to the amount of deviation in the direction of deviation.

In this process, a distance between the underwater vehicle 100 or the surface repeater vehicle 200 and the target object may be determined based on the size of the target object in the captured image, and the amount of correction of the underwater vehicle correction information or the surface repeater vehicle correction information may be adjusted based on the distance.

In the configuration in which the underwater vehicle correction information and the surface repeater vehicle correction information are automatically generated at the linking means 60 (or the manipulation means 58), because it is not necessary to let the administrator understand the situation by displaying the captured image on the image display means 56, a configuration may be employed in which the image as an actual form is not displayed on the image display means 56.

### [Process of Introduction of Underwater Vehicle and Surface Repeater vehicle]

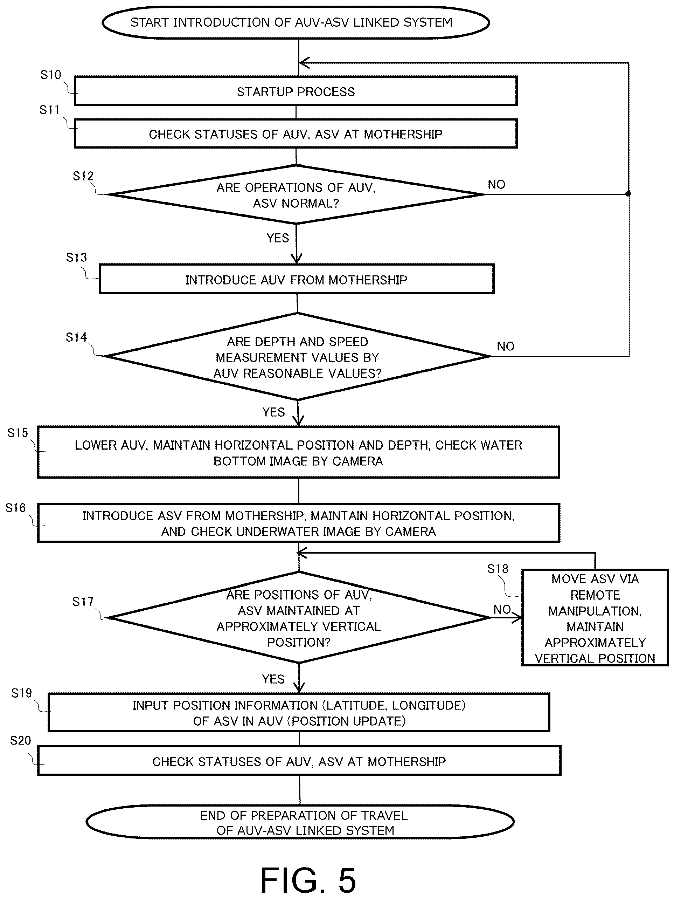

Next, a process of introduction of the underwater vehicle 100 and the surface repeater vehicle 200 will be described with reference to a flowchart of FIG. 5. In the present embodiment, a configuration will be described in which the underwater vehicle 100 and the surface repeater vehicle 200 are introduced from the mothership 300 on the water surface.

In flowcharts of FIGs. 5 to 7, the underwater vehicle 100 is shown as an autonomous unmanned vehicle (AUV) and the surface repeater vehicle 200 is shown as an autonomous unmanned surface vehicle (ASV), but the vehicles are not limited to these, as described above.

In step S 10, a startup process is performed. A system power supply and power supplies for various parts are switched ON in the underwater vehicle 100, the surface repeater vehicle 200, and the mothership 300 on the water surface. In step S 11, a process is performed on the mothership 300 to check statuses of the underwater vehicle 100 and the surface repeater vehicle 200. This step corresponds to a status checking step. In step S12, it is judged whether or not the statuses of the underwater vehicle 100 and the surface repeater vehicle 200 are normal. When operations of the underwater vehicle 100 and the surface repeater vehicle 200 are normal, the process proceeds to step S13, and, when the operations are not normal, the process returns to step S10.

In step S13, an operation is performed to introduce the underwater vehicle 100 into water from the mothership 300. This step corresponds to a vehicle introduction step. In step S14, it is judged whether or not measured values of the depth (altitude) and speed by the underwater vehicle 100 are reasonable values. This step corresponds to an estimated value judgment step. When the estimated values of the depth (altitude) and the speed are reasonable values in the estimated value of the underwater position of the vehicle position estimation means 20 of the underwater vehicle 100, the process proceeds to step S 15, and, when the estimated values are not reasonable values, the process returns to step S10.

In step S 15, a process to lower the underwater vehicle 100 into water is performed. This step corresponds to a vehicle lowering step. The underwater vehicle correction information is transmitted to the underwater vehicle 100 with the use of the manipulation means 58 of the mothership 300, so that the underwater vehicle 100 is caused to approach the water bottom, and a horizontal position (latitude and longitude) and the depth (altitude) are maintained at a predetermined position. In this step, an image of the water bottom may be captured by the vehicle imaging means 22, to check whether or not the imaging process and the transmission and reception process of the captured image can be appropriately performed, and to check that the underwater vehicle 100 is positioned near the water bottom.

In step S 16, an operation is performed to introduce the surface repeater vehicle 200 from the mothership 300. This step corresponds to a repeater vehicle introduction step. The surface repeater vehicle 200 is introduced on the water surface, and the horizontal position (latitude and longitude) is maintained at a predetermined position. In addition, in this step, an image under the water is captured by the repeater vehicle imaging means 42, to check whether or not the imaging process and the transmission and reception process of the captured image can be appropriately performed.

In step S 17, a process is performed to check a vertical position relationship of the underwater vehicle 100 and the surface repeater vehicle 200. This step corresponds to a vertical position relationship checking step. At the mothership 300, it is judged whether or not the underwater vehicle 100 and the surface repeater vehicle 200 are in a vertical position relationship with respect to each other, based on the horizontal position (latitude and longitude) of the own position transmitted from the underwater vehicle 100, and the horizontal position (latitude and longitude) of the own position transmitted from the surface repeater vehicle 200. Here, the vertical position relationship means that the underwater vehicle 100 under the water and the surface repeater vehicle 200 on the water surface are at vertical positions with respect to each other. However, it is not necessary that the underwater vehicle 100 and the surface repeater vehicle 200 be in a completely vertical position relationship, and it is sufficient that the underwater vehicle 100 and the surface repeater vehicle 200 are in an approximately vertical position relationship to a degree that does not obstruct travel or process of the underwater vehicle 100 and the surface repeater vehicle 200, according to a margin of the information transmission line 24 or the like. When the underwater vehicle 100 and the surface repeater vehicle 200 are in the approximately vertical position relationship, the process proceeds to step S19, and, when the underwater vehicle 100 and the surface repeater vehicle 200 are not in the approximately vertical position relationship, the process proceeds to step S18.

In step S18, a process to secure the vertical position relationship of the underwater vehicle 100 and the surface repeater vehicle 200 is performed. This step corresponds to a vertical position securing step. The surface repeater vehicle correction information is transmitted to the surface repeater vehicle 200 with the use of the manipulation means 58 of the mothership 300, to move the surface repeater vehicle 200 to a position which is approximately vertical with respect to the underwater vehicle 100, and to maintain the approximately vertical position. When the process of this step is completed, the process proceeds to step S17.

In step S19, a process is performed to set the position information of the surface repeater vehicle 200 as position information of an initial position of the underwater vehicle 100. This step corresponds to an initial position inputting step. In a state in which the underwater vehicle 100 and the surface repeater vehicle 200 are maintained at the approximately vertical positions, the mothership 300 acquires the own position (latitude and longitude) of the surface repeater vehicle 200, and transmits the own position (latitude and longitude) of the surface repeater vehicle 200 to the underwater vehicle 100. The underwater vehicle 100 sets the own position (latitude and longitude) of the surface repeater vehicle 200 as the initial position (latitude and longitude). In step S20, at the mothership 300, a process is performed to check statuses of the underwater vehicle 100 and the surface repeater vehicle 200.

The process to introduce the underwater vehicle 100 and the surface repeater vehicle 200 from the mothership 300 is realized as described above, in the linked system between the surface repeater vehicle and the underwater vehicle according to the present embodiment. In the present embodiment, a configuration is described in which the underwater vehicle 100 and the surface repeater vehicle 200 are introduced from the mothership 300, but alternatively, a configuration may be employed in which the underwater vehicle 100 and the surface repeater vehicle 200 are introduced from the land or from other floating objects, in place of the mothership 300.

### [Process of travel of Underwater Vehicle and Surface Repeater vehicle]

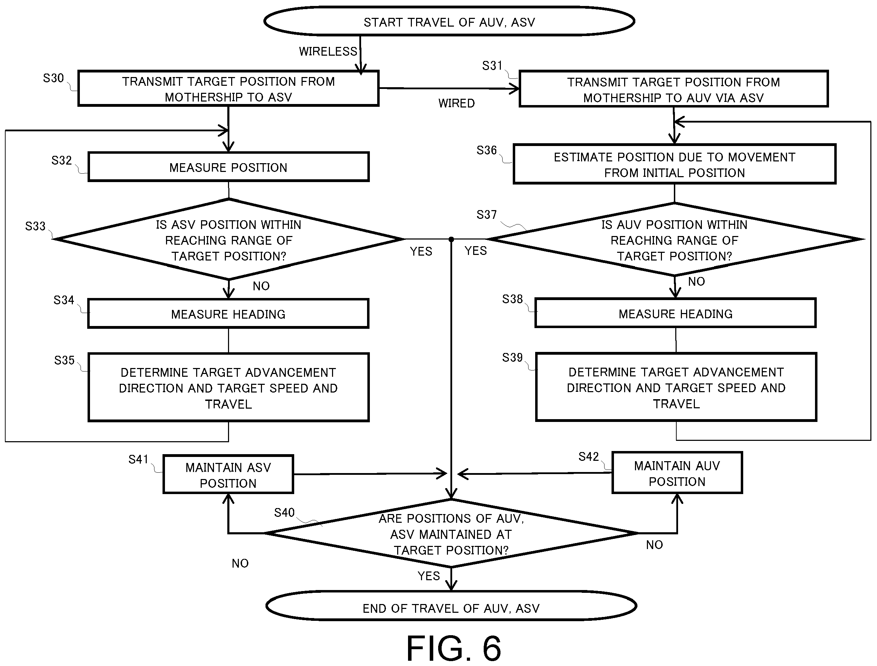

A process of travel of the underwater vehicle 100 and the surface repeater vehicle 200 will now described with reference to a flowchart of FIG. 6.

In step S30, information of a target position is transmitted from the mothership 300 to the surface repeater vehicle 200. This step corresponds to a target position setting step. With the manipulation of an operator or the like, information of an initial position and a way point which are target positions of the surface repeater vehicle 200 are set by the position setting means 54 of the mothership 300, and the target position is set for the surface repeater vehicle 200 via the communication means 62 of the mothership 300 and the communication means 36 of the surface repeater vehicle 200. The information of the target position is stored in the storage means 34. Specifically, the target position is set for the surface repeater vehicle 200 through wireless communication using the wireless communication device 26 equipped on the surface repeater vehicle 200. The target position of the surface repeater vehicle 200 includes information of a target latitude and a target longitude indicating the initial position and the way point.

In step S31, information of the target position is transmitted from the mothership 300 to the underwater vehicle 100 via the surface repeater vehicle 200. This step corresponds to a target position inputting step. With a manipulation of the operator or the like, the information of the initial position and the way point which are the target positions of the underwater vehicle 100 are set by the position setting means 54 of the mothership 300, and the target position is transmitted to the surface repeater vehicle 200 via the communication means 62 of the mothership 300 and the communication means 36 of the surface repeater vehicle 200. Further, the target position is input from the surface repeater vehicle 200 to the underwater vehicle 100 via the communication means 36 of the surface repeater vehicle 200 and the communication means 16 of the underwater vehicle 100. Specifically, the target position is input for the underwater vehicle 100 by the wired communication using the information transmission line 24 connecting the surface repeater vehicle 200 and the underwater vehicle 100. The information of the target position is stored in the storage means 14. The target position of the underwater vehicle 100 includes information of a target latitude, a target longitude, and a target depth indicating the initial position and the way point.

A movement process of the surface repeater vehicle 200 will now be described with reference to the processes of steps S32 to S3 5. The control means 32 of the surface repeater vehicle 200 performs a process to move the surface repeater vehicle 200 by reading, in sequence and at a predetermined interval, the initial position and the way point stored in the storage means 34, setting the position as a current target position, and repeating the processes of steps S32 to S35.

In step S32, measurement of a position is performed at the surface repeater vehicle 200. At the surface repeater vehicle 200, the current position of the frame 30 is measured with the repeater vehicle position measurement means 40 including a satellite positioning system (GPS) or the like. In step S33, a process is performed to judge whether or not the surface repeater vehicle 200 is within a reaching range of the current target position. This step corresponds to a repeater vehicle reaching judgment step. The control means 32 acquires the current position of the frame 30 from the repeater vehicle position measurement means 40, and judges whether or not the current position is within a predetermined reaching range from the current target position. The reaching range may be set to a range which is widened for a certain degree from the current target position, and is set, for example, to a range within a circle of a predetermined radius from the current target position. When the current position is within the predetermined reaching range from the current target position, the process proceeds to step S40, and, when the current position is not within the predetermined reaching range, the process proceeds to step S34.

In step S34, a heading of a direction of travel of the surface repeater vehicle 200 is measured. This step corresponds to a part of a travel control step. In the surface repeater vehicle 200, the heading of the current direction of travel of the frame 30 is measured by the repeater vehicle position measurement means 40 including the attitude and heading reference system (AHRS). In step S35, a process is performed to cause the surface repeater vehicle 200 to travel toward the current target position. This step corresponds to a part of the travel control step. The control means 32 of the surface repeater vehicle 200 determines a target advancement direction and a target speed to move the surface repeater vehicle 200 to the current target position, based on the current position measured in step S32 and the current heading measured in step S34. The control means 32 controls the repeater vehicle propulsion means 38 to move the surface repeater vehicle 200 in the target advancement direction at the target speed, so as to cause the surface repeater vehicle 200 to travel toward the current target position.

Next, a movement process of the underwater vehicle 100 will be described with reference to the processes of steps S36 to S39. The control means 12 of the underwater vehicle 100 performs a process to move the underwater vehicle 100 by reading, in sequence and at a predetermined interval, the initial position and the way point stored in the storage means 14, setting the position as the current target position, and repeating the processes of step S36 to S39.

In step S36, the position is measured at the underwater vehicle 100. At the underwater vehicle 100, the current position of the hull 10 is estimated based on the movement from the initial position, by the vehicle position estimation means 20. In step S37, a process is performed to judge whether or not the underwater vehicle 100 is within a reaching range of the current target position. This step corresponds to a vehicle reaching judgment step. The control means 12 acquires an estimated value of the current position of the hull 10 from the vehicle position estimation means 20, and judges whether or not the estimated value of the current position is within a predetermined reaching range from the current target position. The reaching range may be set to a range which is widened to a certain degree from the current target position, and is set, for example, to a range within a sphere of a predetermined radius from the current target position. When the current position is within the predetermined reaching range from the current target position, the process proceeds to step S40, and, when the current position is not within the predetermined reaching range, the process proceeds to step S38.

In step S38, a heading of a direction of travel of the underwater vehicle 100 is measured. This step corresponds to a part of the travel control step. At the underwater vehicle 100, the heading of the current direction of travel of the hull 10 is measured by the vehicle position estimation means 20 including the attitude and heading reference system (AHSR) or the like. In step S39, a process is performed to cause the underwater vehicle 100 to travel toward the current target position. This step corresponds to a part of the travel control step. The control means 12 of the underwater vehicle 100 determines a target advancement direction and a target speed so as to cause the underwater vehicle 100 to move to the current target position, based on the current position estimated in step S37 and the current heading measured in step S38. The control means 12 controls the travel means 18 to move the underwater vehicle 100 in the target advancement direction at the target speed, so as to cause the underwater vehicle 100 to travel toward the current target position.

The target speed of the underwater vehicle 100 in step S39 may be matched with the target speed of the surface repeater vehicle 200 in step S3 5. With such a configuration, the underwater vehicle 100 and the surface repeater vehicle 200 can travel at the same speed, and the underwater vehicle 100 and the surface repeater vehicle 200 can be maintained in the approximately vertical position relationship during the travel. However, even when a distance between the underwater vehicle 100 and the surface repeater vehicle 200 is enlarged, due to the information transmission line 24, one of the vehicles traveling with a higher speed would pull the other vehicle traveling with a lower speed, and thus, the approximately vertical reposition relationship between the underwater vehicle 100 and the surface repeater vehicle 200 would not be significantly deviated.

In step S40 to S42, a process is performed to maintain the underwater vehicle 100 and the surface repeater vehicle 200 at the target position. The processes of steps S40 to S42 correspond to a target maintaining step.

In step S40, it is judged whether or not both the underwater vehicle 100 and the surface repeater vehicle 200 have reached the target positions and the positions are maintained. After it is judged in step S33 that the surface repeater vehicle 200 is within the reaching range of the target position, and it is judged in step S37 that the underwater vehicle 100 is within the reaching range of the target position, it is judged whether or not both the surface repeater vehicle 200 and the underwater vehicle 100 maintain the target positions. When both the underwater vehicle 100 and the surface repeater vehicle 200 maintain the target positions, the travel process is completed. When the surface repeater vehicle 200 does not maintain the target position, the process proceeds to step S41. In step S41, control is applied so that the surface repeater vehicle 200 maintains the target position, and the process returns to step S40. When the underwater vehicle 100 does not maintain the target position, the process proceeds to step S42. In step S42, control is applied so that the underwater vehicle 100 maintains the target position, and the process returns to step S40.

When, after the underwater vehicle 100 and the surface repeater vehicle 200 have reached the target positions, the underwater vehicle 100 is moved through manipulation for an operation, the surface repeater vehicle 200 is set in a tracking mode of the underwater vehicle 100, to follow the horizontal position (latitude and longitude) of the underwater vehicle 100. In this case, the own position (latitude and longitude) estimated by the vehicle position estimation means 20 of the underwater vehicle 100 may be transmitted to the surface repeater vehicle 200, and the surface repeater vehicle 200 may be caused to travel with the estimated own position (latitude and longitude) as the target position, and such that the own position measured by the repeater vehicle position measurement means 40 becomes closer to the target position.

However, in order to prevent excessively sensitive movement of the surface repeater vehicle 200 with the travel of the underwater vehicle 100, an allowance range may be set in the distance between the horizontal position (latitude and longitude) of the underwater vehicle 100 and the horizontal position (latitude and longitude) of the surface repeater vehicle 200. For example, a setting may be employed in which the surface repeater vehicle 200 does not track the underwater vehicle 100 when a distance between the horizontal position (latitude and longitude) of the underwater vehicle 100 and the horizontal position (latitude and longitude) of the surface repeater vehicle 200 is within 5 m.

The travel processes of the underwater vehicle 100 and the surface repeater vehicle 200 are realized as described above, in the linked system between the surface repeater vehicle and the underwater vehicle according to the present embodiment.

### [Correction Process of Vertical Position of Underwater Vehicle and Surface Repeater vehicle]

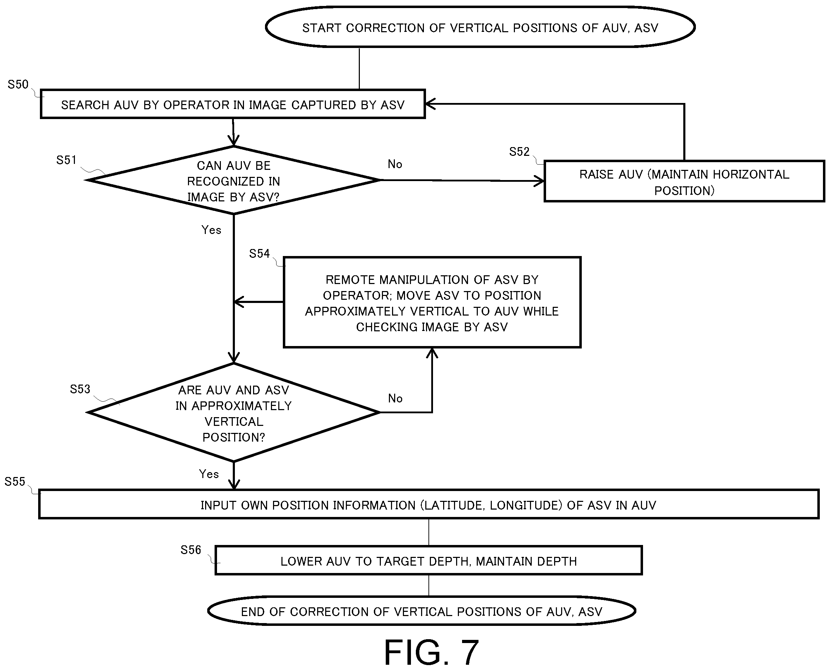

A process for correcting the vertical positions of the underwater vehicle 100 and the surface repeater vehicle 200 will now be described with reference to a flowchart of FIG. 7. This process may be performed when the approximately vertical positions are not maintained by the underwater vehicle 100 and the surface repeater vehicle 200, or when it is unknown whether or not the approximately vertical positions are maintained. In addition, this step may be performed when, after the underwater vehicle 100 and the surface repeater vehicle 200 have traveled, the relative position relationship in the vertical direction is to coincide between the underwater vehicle 100 and the surface repeater vehicle 200 at a certain time interval. Further, this step may be performed when the horizontal positions of the underwater vehicle 100 and the surface repeater vehicle 200 are to be corrected when the underwater vehicle 100 and the surface repeater vehicle 200 are introduced, to achieve the approximately vertical positions with respect to each other.

In step S50, a process is performed at the surface repeater vehicle 200 to search for the underwater vehicle 100. This step corresponds to a part of a vehicle position checking step. An imaging control signal is transmitted from the mothership 300 to the surface repeater vehicle 200, so that an image of a region under the water near the surface repeater vehicle 200 is captured by the repeater vehicle imaging means 42 of the surface repeater vehicle 200. For example, an image of a region near an area immediately below the surface repeater vehicle 200 is captured. The captured image is transmitted from the surface repeater vehicle 200 to the mothership 300, and is displayed on the image display means 56 of the mothership 300.

In step S51, it is judged whether or not the underwater vehicle 100 can be recognized. This step corresponds to a part of the vehicle position checking step. The operator on the mothership 300 judges whether or not the underwater vehicle 100 can be recognized in the image displayed on the image display means 56 in step S50. Alternatively, it is automatically judged whether or not the underwater vehicle 100 can be recognized in the image displayed on the image display means 56 in step S50 through existing image processing. When the underwater vehicle 100 can be recognized in the image, the process proceeds to step S53, and, when the underwater vehicle 100 cannot be recognized, the process proceeds to step S52.

In step S52, a process is performed to raise the underwater vehicle 100. This step corresponds to a vehicle raising step. When the underwater vehicle 100 cannot be recognized in step S51, a raise control signal is transmitted from the mothership 300 to the underwater vehicle 100 via the surface repeater vehicle 200. When the control means 12 of the underwater vehicle 100 receives the raise control signal, the control means 12 controls the travel means 18 to raise the underwater vehicle 100. In this process, desirably, the horizontal position (latitude and longitude) of the underwater vehicle 100 is maintained. Steps S50 to S52 are repeated until the underwater vehicle 100 can be recognized in the image captured by the surface repeater vehicle 200.

In step S53, it is judged whether or not the underwater vehicle 100 and the surface repeater vehicle 200 are in an appropriate vertical position relationship. This step corresponds to a position judgment step. The operator on the mothership 300 judges whether or not the underwater vehicle 100 and the surface repeater vehicle 200 are in the approximately vertical position relationship in the image displayed on the image display means 56 in step S50. Alternatively, it is automatically judged whether or not the underwater vehicle 100 and the surface repeater vehicle 200 are in the approximately vertical position relationship in the image displayed on the image display means 56 in step S50, through existing image processing. When the underwater vehicle 100 and the surface repeater vehicle 200 are in the approximately vertical position relationship in the image, the process proceeds to S55, and, when the underwater vehicle 100 and the surface repeater vehicle 200 are not in the approximately vertical position relationship, the process proceeds to step S54.

In step S54, a process is performed to move the surface repeater vehicle 200 to set the underwater vehicle 100 and the surface repeater vehicle 200 in the approximately vertical position relationship. This step corresponds to a position deviation correction step. When the underwater vehicle 100 and the surface repeater vehicle 200 are not in the approximately vertical position relationship in step S53, the operator manipulates the manipulation means 58 while checking the image displayed on the image display means 56 at the mothership 300, to transmit a movement control signal to the surface repeater vehicle 200. Alternatively, the movement control signal to move the surface repeater vehicle 200 toward the underwater vehicle 100 is automatically transmitted based on the image displayed on the image display means 56, through existing image processing. When the control means 32 of the surface repeater vehicle 200 receives the movement control signal, the control means 32 controls the repeater vehicle propulsion means 38, to cause the surface repeater vehicle 200 to travel such that the surface repeater vehicle 200 is in the approximately vertical position relationship relative to the underwater vehicle 100. Steps S53 and S54 are repeated until the underwater vehicle 100 and the surface repeater vehicle 200 are set in the approximately vertical position relationship.

In step S55, a process to correct the own position of the underwater vehicle 100 is performed. This step corresponds to an underwater position correction step. The own position (latitude and longitude) of the surface repeater vehicle 200 measured by the repeater vehicle position measurement means 40 of the surface repeater vehicle 200 is transmitted to the underwater vehicle 100 via the information transmission line 24. The underwater vehicle 100 receives the input of the own position (latitude and longitude) of the surface repeater vehicle 200, and corrects the current own position (latitude and longitude) of the underwater vehicle 100 to match the own position (latitude and longitude) of the surface repeater vehicle 200. With this process, the information of the horizontal positions (latitudes and longitudes) match between the underwater vehicle 100 and the surface repeater vehicle 200, and an accuracy of the own position of the underwater vehicle 100 estimated by the vehicle position estimation means 20 of the underwater vehicle 100 can be improved.

In step S56, a process to lower the underwater vehicle 100 to a target depth is performed. The control means 12 of the underwater vehicle 100 controls the travel means 18, to lower the underwater vehicle 100 to the target depth.

The vertical positions of the underwater vehicle 100 and the surface repeater vehicle 200 can be corrected as described above, in the linked system of the surface repeater vehicle and the underwater vehicle according to the present embodiment. With this process, the approximately vertical positions of the underwater vehicle 100 and the surface repeater vehicle 200 can be maintained.

### <First Alternative Configuration>

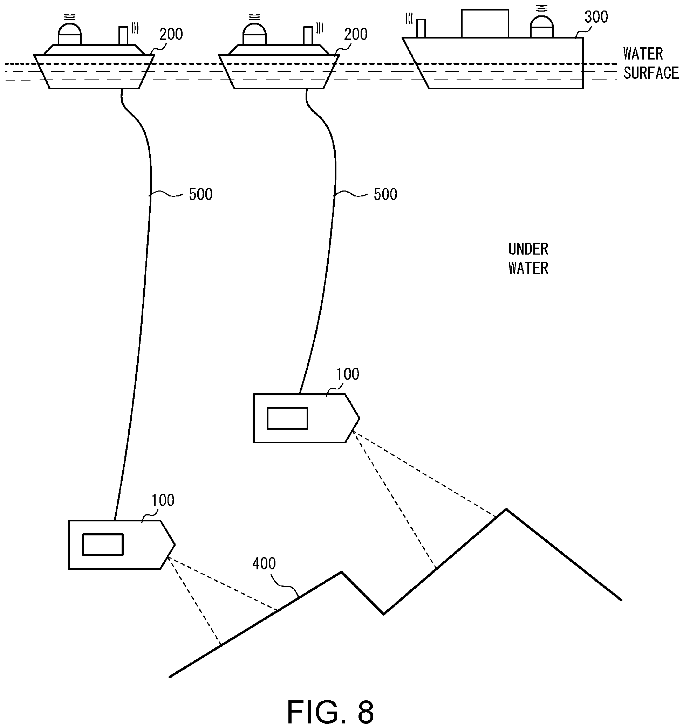

In the embodiment described above, a structure is described in which one group consisting of the underwater vehicle 100 and the surface repeater vehicle 200 is used. In a first alternative configuration, as shown in FIG. 8, a structure is employed in which a plurality of groups each consisting of the underwater vehicle 100 and the surface repeater vehicle 200 are used.

The processes of introducing the underwater vehicle 100 and the surface repeater vehicle 200 as shown in FIG. 5 are repeated, and applied for each group consisting of the underwater vehicle 100 and the surface repeater vehicle 200. Then, for each group consisting of the underwater vehicle 100 and the surface repeater vehicle 200, respective information of the target latitude and the target longitude is transmitted from the mothership 300, and the processes of travel of the underwater vehicle 100 and the surface repeater vehicle as shown in FIG. 6 are applied to each group of the underwater vehicle 100 and the surface repeater vehicle 200.

With this process, an inspection target such as resources and subaqueous cables over a wide range can be simultaneously investigated with the plurality of groups of the underwater vehicles 100 and the surface repeater vehicles 200, and the investigation time can be shortened.

### <Second Alternative Configuration>

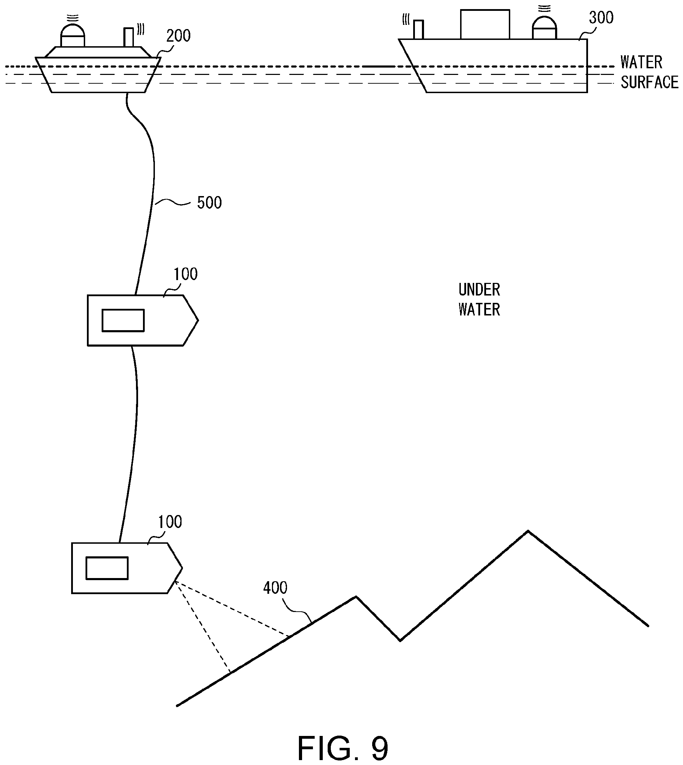

In the embodiment described above, a structure is described in which one surface repeater vehicle 200 is combined with one underwater vehicle 100. In a second alternative configuration, as shown in FIG. 9, a structure is employed in which a plurality of surface repeater vehicles 200 are combined with one underwater vehicle 100.

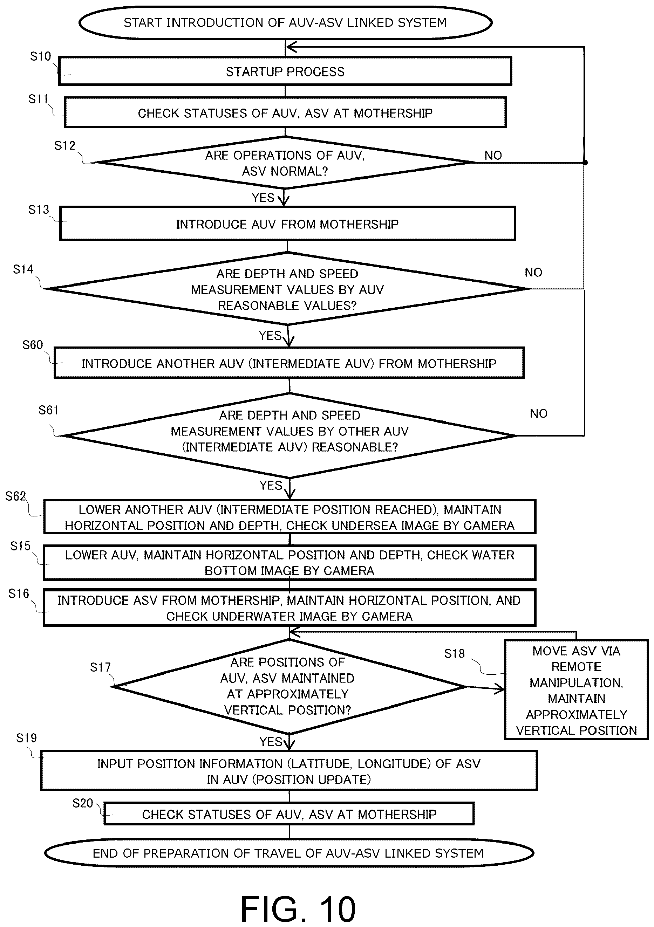

FIG. 10 shows processes of introducing the underwater vehicles 100 and the surface repeater vehicle 200 in the second alternative configuration. In FIG. 10, the steps having the same processes as those in the introduction of the underwater vehicle 100 and the surface repeater vehicle 200 shown in FIG. 5 are assigned the same step numbers as FIG. 5, and their descriptions will not be repeated.

With the processes of steps S13 to S14, the operation to introduce a first underwater vehicle 100 from the mothership 300 into water is performed. Then, in step S60, an operation to introduce another underwater vehicle 100; that is, an intermediate underwater vehicle 100 to be placed between the first underwater vehicle 100 and the surface repeater vehicle 200, from the mothership 300 into the water is performed. This step corresponds to an intermediate vehicle introduction step. In step S61, it is judged whether or not the measured values of the depth (altitude) and the speed by the other underwater vehicle 100 introduced into the water are reasonable values. This step corresponds to an estimated value judgment step for the other underwater vehicle 100. When the estimated values of the depth (altitude) and the speed are reasonable values in the estimated values at the underwater position of the vehicle position estimation means 20 of the underwater vehicle 100, the process proceeds to step S62, and, when the estimated values are not reasonable value, the process returns to step S10.

In step S62, a process to lower the other underwater vehicle 100 into the water is performed. This step corresponds to a vehicle lowering step for the other underwater vehicle 100. The underwater vehicle correction information is transmitted to the other underwater vehicle 100 with the use of the manipulation means 58 of the mothership 300, to cause the other underwater vehicle 100 to be positioned at a desired horizontal position (latitude and longitude) and a desired depth (altitude), and the horizontal position (latitude and longitude) and the depth (altitude) are maintained at this position. Specifically, desirably, control is performed such that the first underwater vehicle 100, the intermediate underwater vehicle 100, and the surface repeater vehicle 200 are positioned in vertical positions with respect to each other. Alternatively, in this step, an image may be captured by the vehicle imaging means 22 to check whether or not the imaging process and the transmission and reception processes of the captured image can be appropriately performed, and to check that the underwater vehicle 100 is placed at the desired horizontal position (latitude and longitude) and at the desired depth (altitude).

When two or more other underwater vehicles 100 are to be provided, the processes of steps S60 to S62 may be repeated. After these steps, the process proceeds to step S15.

In the structure of the second alternative configuration also, similar to the first alternative configuration described above, a structure may be employed in which a plurality of groups of the underwater vehicles 100 and the surface repeater vehicles 200 are used. In this case, the processes of introduction of the underwater vehicles 100 and the surface repeater vehicle 200 shown in FIG. 10 are repeated for each group consisting of the underwater vehicles 100 and the surface repeater vehicle 200. Information of the target latitude and the target longitude are transmitted to each group consisting of the underwater vehicles 100 and the surface repeater vehicle 200 from the mothership 300, and the processes of travel of the underwater vehicle 100 and the surface repeater vehicle 200 shown in FIG. 6 are applied for each group consisting of the underwater vehicles 100 and the surface repeater vehicle 200.

### <Third Alternative Configuration>

In a third alternative configuration, a structure is employed in which the horizontal position (latitude and longitude) and the depth (altitude) of the underwater vehicle 100 are controlled in order to receive, using a geophone (hydrophone), a vibration from a transmission source provided on the mothership 300.

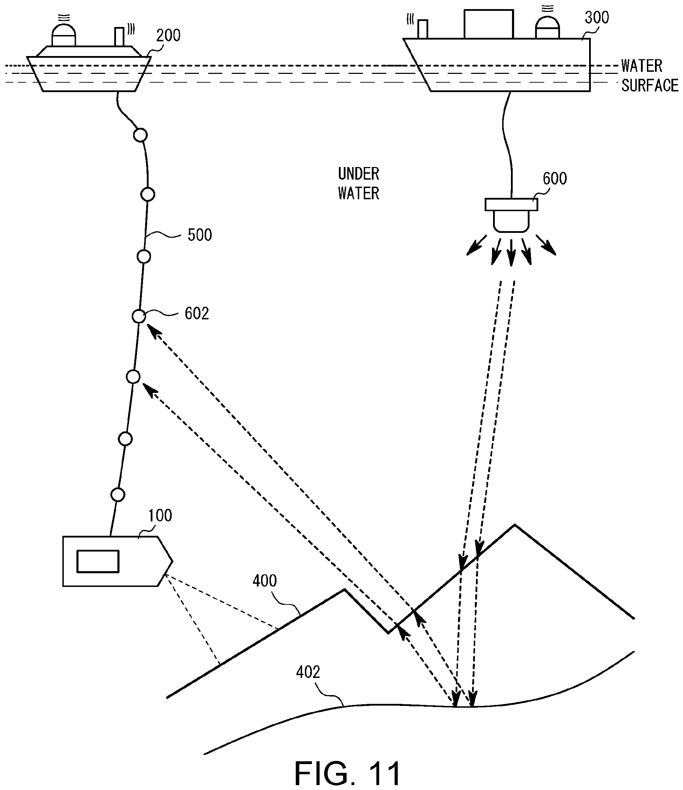

FIG. 11 shows a structure of a linked system of a surface repeater vehicle and an underwater vehicle in the third alternative configuration. In the third alternative configuration, the system comprises, in addition to the underwater vehicle 100, the surface repeater vehicle 200, and the mothership 300, an acoustic oscillator 600 provided on the mothership 300 and introduced into the water, and geophones (hydrophones) 602 provided on the cable 500 at a certain interval.

The acoustic oscillator 600 is an underwater vibration source which is introduced into water from the mothership 300 and which generates acoustic vibration under the water. The acoustic oscillator 600 may be formed including, for example, an air gun, a sparker, a boomer, or the like. The vibration generated from the acoustic oscillator 600 is, for example, desirably in a frequency band of a few hundreds to a few thousands of Hz, having superior spatial resolution.

As shown in FIG. 11, the acoustic vibration generated from the acoustic oscillator 600 propagates through the water and, further, under the water bottom 400, and is reflected by a reflection surface 402, which is a boundary of the bed layer, as a reflected acoustic vibration. The reflected acoustic vibration propagates from under the water bottom 400 into the water.

The geophone 602 detects the vibration propagating in the water. At least one geophone 602, desirably, a plurality of geophones 602, are provided on the cable 500 connecting the underwater vehicle 100 and the surface repeater vehicle 200. The geophone 602 sends to the surface repeater vehicle 200 information of the detected vibration along with hydrophone information assigned uniquely for each geophone 602 such as an identifier. By combining the acoustic oscillator 600 and the geophone 602, it is possible to detect, at the geophone 602, the acoustic vibration generated from the acoustic oscillator 600 and reflected by the reflection surface 402.

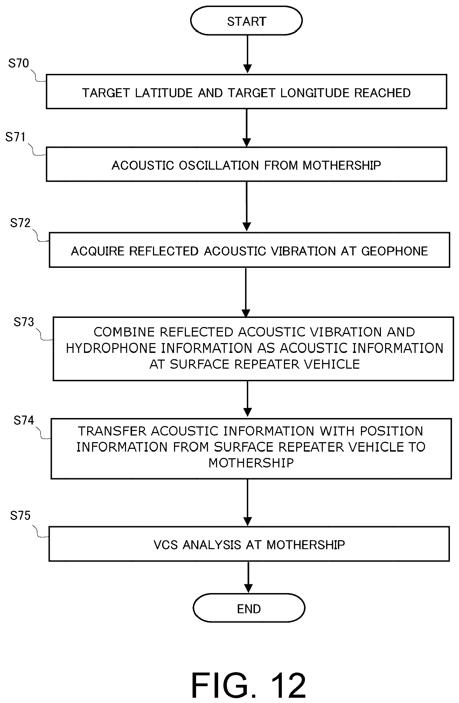

FIG. 12 shows a process using the acoustic oscillator 600 and the geophone 602 in the third alternative configuration. In step S70, the mothership 300 reaches the target latitude and the target longitude. When the mothership 300 reaches the target latitude and the target longitude, an operation to introduce the acoustic oscillator 600 into the water is performed. In step S71, the acoustic vibration is generated from the acoustic oscillator 600 through control from the mothership 300.

In step S72, the reflected acoustic vibration reflected by the reflection surface 402 under the water bottom 400 is detected by the geophone 602. In this case, desirably, the reflected acoustic vibration is detected by a plurality of the geophones 602. In step S73, the reflected acoustic vibration detected by the geophone 602 is transmitted to the surface repeater vehicle 200 as the acoustic information along with the hydrophone information. When the plurality of geophones 602 are provided, the acoustic information from the plurality of geophones 602 are combined at the surface repeater vehicle 200. In step S74, the acoustic information is transferred from the surface repeater vehicle 200 to the mothership 300. The surface repeater vehicle 200 transmits the acoustic information along with its position information to the mothership 300. Alternatively, the acoustic information from the plurality of geophones 602 may be transmitted to the mothership 300 in real time along with the position information of the surface repeater vehicle 200.

In step S75, a VCS (Vertical Cable Seismic) analysis is performed at the mothership 300. At the mothership 300, the VCS analysis is performed using the acoustic information transferred from the surface repeater vehicle 200.

In the VCS analysis, a structural image of the reflection surface 402 centered at the cable 500 can be obtained from a distribution of reflection points of the reflection surface 402. In this process, a three-dimensional structure of a target range can be effectively understood by appropriately varying the positions of the underwater vehicle 100, the surface repeater vehicle 200, and the cable 500 connecting these, and the distribution of the acoustic oscillator 600, or by varying the position of the acoustic oscillator 600 by the mothership 300 being moved. In this process, degradation of the resolution (enlargement of Fresnel volume) due to a wave phenomenon can be suppressed by placing the plurality of geophones 602 on the cable 500 extended in the vertical direction. In addition, noise due to waves may be reduced by placing the geophone 602 under the water. With this configuration, the resolution can be improved in comparison with the surface reflection method (MCS) of the related art, in both the vertical direction and the horizontal direction.

Further, by combining the structure of the third alternative configuration to the structure of the first alternative configuration in which a plurality of groups of the underwater vehicles 100, the surface repeater vehicles 200, and the cables 500 connecting these are simultaneously used, it is possible to more effectively understand the three-dimensional structure of the target range. By combing the structure of the third alternative configuration to the structure of the second alternative configuration in which a plurality of the underwater vehicles 100, the surface repeater vehicle 200, and the cable 500 connecting these are simultaneously used, it becomes possible to apply the VCS analysis in a state in which the cable 500 is placed in the vertical direction with high precision, and to understand the three-dimensional structure of the target range with a higher precision.

### [Measurement Process using Linked System of Surface Repeater vehicle and Underwater Vehicle]

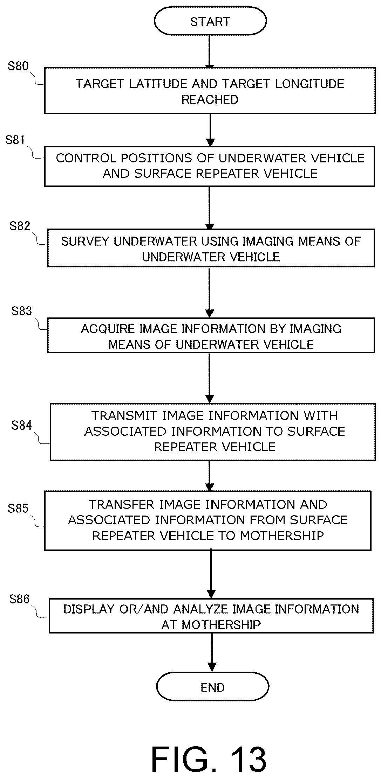

FIG. 13 shows a measurement process using a linked system of a surface repeater vehicle and an underwater vehicle according to the embodiment and the alternative configurations described above.

In step S80, the mothership 300 reaches the target latitude and the target longitude. In step S81, the processes of introduction of the underwater vehicle 100 and the surface repeater vehicle 200, and the process of travel of the underwater vehicle 100 and the surface repeater vehicle 200 according to the above-described embodiment are applied, to control positions of the underwater vehicle 100 and the surface repeater vehicle 200.

In step S82, surveying under the water is performed using the vehicle imaging means 22 of the underwater vehicle 100. In step S83, an image under the water and an image of the water bottom are acquired using the vehicle imaging means 22 of the underwater vehicle 100. In step S84, image information acquired in step S83 is transmitted from the underwater vehicle 100 to the surface repeater vehicle 200. In this process, desirably, associated information associated with to the image information is also transmitted from the underwater vehicle 100 to the surface repeater vehicle 200. The associated information may be, for example, a current longitude and a current latitude of the underwater vehicle 100, and a depth from the water surface. Alternatively, the associated information may be, for example, the date and time of acquisition of the image, or the like.

In step S85, the image information is transferred from the surface repeater vehicle 200 to the mothership 300. When the associated information is attached to the image information, desirably, the associated information is transferred along with the image information from the surface repeater vehicle 200 to the mothership 300. In step S86, a process with respect to the image information is performed at the mothership 300. At the mothership 300, for example, a process to display an image based on the image information, or an analysis process of the image information is performed. When the associated information is attached to the image information, a display process or an analysis process based on the associated information may be performed at the mothership 300.

### INDUSTRIAL APPLICABILITY

The present disclosure can be applied to high precision travel control, monitoring of a target object, or the like of an autonomous underwater vehicle. That is, operation efficiency can be improved in inspection, monitoring, repairing, or the like of a target object under the water by the underwater vehicle while maintaining a position relationship between the underwater vehicle and a surface repeater vehicle. For example, the present disclosure may be employed for environmental investigation of the water bottom (seagrass, seaweed, coral, or the like), investigation under the water bottom (bed layer structure), aquatic resource investigation (demersal fish, shells, or the like), aquatic facility inspection (fish pen, fish reef, or the like), inspection of an underwater portion of a harbor facility (quay, breakwater, or the like), inspection of an underwater portion of an offshore wind power generation facility, inspection of a submarine pipeline of a petroleum gas facility, ship bottom inspection, inspection of an underwater portion of a dam-formed lake, or the like.

### REFERENCE SIGNS LIST

10 hull, 12 control means, 14 storage means, 16 communication means, 18 travel means, 20 vehicle position estimation means, 22 vehicle imaging means, 22 storage means, 24 information transmission line, 26 wireless communication device, 30 frame, 32 control means, 34 storage means, 36 communication means, 38 repeater vehicle propulsion means, 40 repeater vehicle position measurement means, 40a receiver, 42 repeater vehicle imaging means, 50 hull, 52 positioning means, 54 position setting means, 56 image display means, 58 manipulation means, 60 linking means, 62 communication means, 100 underwater vehicle, 200 surface repeater vehicle, 300 mothership, 302 monitoring means, 400 water bottom, 402 reflection surface, 500 cable, 600 acoustic oscillator, 602 geophone.

## Claims

1. A linked system of a surface repeater vehicle and an underwater vehicle, the linked system comprising:
a surface repeater vehicle having a repeater vehicle propulsion means and a repeater vehicle position measurement means;
an underwater vehicle having a vehicle position estimation means;
an information transmission line that connects the surface repeater vehicle and the underwater vehicle, and that transmits acquired information including image information acquired by the underwater vehicle;
a position setting means that sets a target latitude and a target longitude for the surface repeater vehicle and the underwater vehicle; and
a control means that controls the surface repeater vehicle and the underwater vehicle, wherein
a position of the surface repeater vehicle is controlled with the control means by driving the repeater vehicle propulsion means based on the target latitude and the target longitude which are set and a surface position measured by the repeater vehicle position measurement means, and a position of the underwater vehicle is controlled with the control means based on the target latitude and the target longitude which are set and an underwater position estimated by the vehicle position estimation means, so that the underwater vehicle and the surface repeater vehicle travel in parallel with each other to the target latitude and the target longitude while maintaining a vertical position relationship between the water surface and underwater.

2. The linked system of the surface repeater vehicle and the underwater vehicle according to claim 1, further comprising:
a mothership having the position setting means, wherein
the target latitude, the target longitude, and the acquired information are transmitted between the mothership and the surface repeater vehicle using wireless communication.

3. The linked system of the surface repeater vehicle and the underwater vehicle according to claim 2, wherein
at least one of the surface repeater vehicle or the underwater vehicle can be remotely manipulated from the mothership.

4. The linked system of the surface repeater vehicle and the underwater vehicle according to any one of claims 1 to 3, wherein
the repeater vehicle position measurement means has a satellite positioning system receiver and an attitude and heading reference system (AHRS).

5. The linked system of the surface repeater vehicle and the underwater vehicle according to any one of claims 1 to 4, wherein
the vehicle position estimation means has an inertial navigation system (INS) and a Doppler velocity log (DVL), or has an attitude and heading reference system (AHRS) and the Doppler velocity log (DVL).

6. The linked system of the surface repeater vehicle and the underwater vehicle according to any one of claims 1 to 5, wherein
the vehicle position estimation means has a depth indicator, and
the underwater vehicle is controlled with the control means such that the underwater vehicle is positioned at a depth which is set by the position setting means.

7. The linked system of the surface repeater vehicle and the underwater vehicle according to any one of claims 1 to 6, wherein
the surface repeater vehicle has repeater vehicle imaging means which can image the underwater vehicle.

8. The linked system of the surface repeater vehicle and the underwater vehicle according to any one of claims 1 to 7, wherein
the linked system comprises a plurality of groups of the surface repeater vehicles, the underwater vehicles, the information transmission lines, and the control means, and
the position setting means sets the target latitude and the target longitude for each of the plurality of groups.

9. The linked system of the surface repeater vehicle and the underwater vehicle according to any one of claims 1 to 7, further comprising:
another underwater vehicle at an intermediate point on the information transmission line.

10. The linked system of the surface repeater vehicle and the underwater vehicle according to any one of claim 2, and claims 3 to 9 selecting claim 2, wherein
a plurality of vibration receiving means are provided at a plurality of locations on the information transmission line, acoustic oscillation means which transmits acoustic waves into water is provided on the mothership, a reflected acoustic vibration from a bed layer due to transmission of the acoustic waves by the acoustic oscillation means is acquired by the plurality of vibration receiving means, and the reflected acoustic vibration which is acquired is transmitted as acoustic information using the information transmission line.

11. A method of operating the linked system of the surface repeater vehicle and the underwater vehicle according to any one of claims 1 to 10, the method comprising:
a vehicle introduction step in which the underwater vehicle is introduced into water;
a vehicle lowering step in which the underwater vehicle is caused to approach a water bottom and is maintained at a predetermined position;
a repeater vehicle introduction step in which the surface repeater vehicle is introduced on a water surface;
a vertical position securing step in which the surface repeater vehicle and the underwater vehicle are set in the vertical position relationship; and
an initial position inputting step in which, after the surface repeater vehicle and the underwater vehicle are set in the vertical position relationship, the surface position measured by the repeater vehicle position measurement means is transmitted to the underwater vehicle via the information transmission line, and is input as an initial position of the underwater position of the underwater vehicle.

12. The method of operating the linked system of the surface repeater vehicle and the underwater vehicle according to claim 11, wherein
in the vertical position securing step, when the surface repeater vehicle and the underwater vehicle are not set in the vertical position relationship, an operator manipulates the surface repeater vehicle to correct the position such that the underwater vehicle is set in the vertical position relationship, to thereby secure the vertical position relationship.

13. The method of operating the linked system of the surface repeater vehicle and the underwater vehicle according to claim 11 or 12, further comprising:
a target position setting step in which, after the initial position inputting step, the position setting means sets the target latitude and the target longitude for the surface repeater vehicle;
a target position inputting step in which the target latitude and the target longitude which are set are transmitted and input to the underwater vehicle via the information transmission line;
a travel control step in which the surface repeater vehicle and the underwater vehicle are controlled to travel in parallel with each other and with an equal speed toward the target latitude and the target longitude while maintaining the vertical position relationship; and
a position maintaining step in which, after the target latitude and the target longitude are reached, positions of the surface repeater vehicle and the underwater vehicle are maintained.

14. The method of operating the linked system of the surface repeater vehicle and the underwater vehicle according to claim 13, wherein
the travel control step comprises:
a repeater vehicle reaching judgment step in which it is judged whether or not the surface position of the surface repeater vehicle is within a reaching range of the target latitude and the target longitude; and
a vehicle reaching judgment step in which it is judged whether or not the underwater position of the underwater vehicle is within the reaching range of the target latitude and the target longitude, and
the method proceeds to the position maintaining step when the surface repeater vehicle and the underwater vehicle have reached the reaching range.

15. A method of operating the linked system of the surface repeater vehicle and the underwater vehicle according to any one of claims 1 to 10, the method comprising:
a vehicle position checking step in which a position of the underwater vehicle is checked using imaging means;
a position judgment step in which it is judged whether or not the underwater vehicle is positioned immediately below the surface repeater vehicle; and
an underwater position correction step in which, when the underwater vehicle is positioned immediately below the surface repeater vehicle, the surface position acquired by the repeater vehicle position measurement means is transmitted to the underwater vehicle via the information transmission line, and the underwater position of the underwater vehicle is controlled to correct the vertical position relationship of the surface repeater vehicle and the underwater vehicle.

16. The method of operating the linked system of the surface repeater vehicle and the underwater vehicle according to claim 15, further comprising:
a vehicle raising step in which, when an operator cannot recognize the position of the underwater vehicle in the vehicle position checking step, the position of the underwater vehicle is controlled to raise the underwater vehicle to a position at which the underwater vehicle can be recognized with the imaging means.

17. The method of operating the linked system of the surface repeater vehicle and the underwater vehicle according to claim 15 or 16, further comprising:
a position deviation correction step in which, when it is judged in the position judgment step that the underwater vehicle is not positioned immediately below the surface repeater vehicle, the position of the surface repeater vehicle is controlled by a manipulation of an operator, to move the surface repeater vehicle to a position immediately above the underwater vehicle.

18. The method of operating the linked system of the surface repeater vehicle and the underwater vehicle according to claim 11 selecting claim 2 or 3, further comprising:
an acoustic oscillation step in which, after the target latitude and the target longitude are reached, an acoustic wave is transmitted from the acoustic oscillation means provided on the mothership;
a reflected acoustic vibration acquisition step in which the reflected acoustic vibration from the bed layer is acquired by a plurality of the vibration receiving means; and
an information transmission step in which the reflected acoustic vibration which is acquired is transmitted as acoustic information to the mothership via the information transmission line and the wireless communication.
